# EUROPÄISCHE PATENTANMELDUNG

(11) **EP 3 533 815 A1**
(43) Veröffentlichungstag der Anmeldung: **04.09.2019**
(21) Anmeldenummer: 18159328.6
(22) Anmeldetag: 28.02.2018
(51) Int. Cl.: C08G 18/48, C08G 18/54, C08G 18/72, C08G 18/76, C08G 18/79, C08G 18/10, C08G 18/32

(54) **POLYURETHANWEICHSCHAUMSTOFFE AUF BASIS VON POLYOXYMETHYLEN-POLYOXYALKYLEN-BLOCKCOPOLYMEREN**

(71) Anmelder: Covestro Deutschland AG, 51373 Leverkusen (DE)
(72) Erfinder: Die Erfindernennung liegt noch nicht vor
(74) Vertreter: Levpat

(57) **Zusammenfassung**

Die vorliegende Erfindung betrifft ein Verfahren zur Herstellung von Polyurethanweichschaumstoffen auf Basis von Polyoxymethylen-Polyoxyalkylen-Blockcopolymeren. Ferner betrifft die Erfindung die mit dem Verfahren erhaltenen Polyurethanweichschaumstoffe sowie deren Verwendung zur Herstellung von Möbelpolsterungen, Textileinlagen, Matratzen, Automobilsitze, Kopfstützen, Armlehnen, Schwämmen, Schaumstofffolien zur Verwendung in Automobilteilen wie beispielsweise Dachhimmeln, Türseitenverkleidungen, Sitzauflagen und Bauelementen. Sowie ein Zweikomponenten-System zur Herstellung von Polyurethanweichschaumstoffen.

## Beschreibung

Die vorliegende Erfindung betrifft ein Verfahren zur Herstellung von Polyurethanweichschaumstoffen auf Basis von Polyoxymethylen-Polyoxyalkylen-Blockcopolymeren. Ferner betrifft die Erfindung die mit dem Verfahren erhaltenen Polyurethanweichschaumstoffe sowie deren Verwendung zur Herstellung von Möbelpolsterungen, Textileinlagen, Matratzen, Automobilsitze, Kopfstützen, Armlehnen, Schwämmen, Schaumstofffolien zur Verwendung in Automobilteilen wie beispielsweise Dachhimmeln, Türseitenverkleidungen, Sitzauflagen und Bauelementen. Sowie ein Zweikomponenten-System zur Herstellung von Polyurethanweichschaumstoffen.

Auf dem Gebiet der Polyurethanweichschaumstoffe liegt der Bedarf vor, nachhaltigere Polyurethanweichschaumstoffe bereitzustellen, die im Automobilinnenraum eingesetzt werden können. Um für den Einsatz im Automobilinnenraum geeignet zu sein benötigen die Schaumstoffe eine gute Flammbeständigkeit, ferner dürfen die Schaumstoffe nur eine bestimmte Emission an flüchtigen Kohlenwasserstoffen (VOC) aufweisen (Norm FMVSS 302).

Die Erfinder der vorliegenden Erfindung versuchten deshalb eine Zusammensetzung zu finden, in welchen C₂- und C₃-Bausteine durch leicht verfügbare C1-Bausteine ersetzt werden können.

In der WO 2004/096746 A1 sind Isocyanat-reaktive Diole mit OH-Zahlen von 685 und 868 mg KOH/g auf Polyoxymethylen (POM) Basis experimentell beschrieben und es wurde in dem Dokument generell dargelegt, dass diese zur Herstellung von Prepolymeren und Weichschäumen geeignet sein könnten. Eine konkrete Zusammensetzung oder ein Ausführungsbeispiel wurden jedoch nicht beschrieben.

Die Aufgabe der vorliegenden Erfindung war somit das Bereitstellen eines Polyurethanweichschaumstoffs auf Polyoxymethlyen-Basis, welcher eine gute Flammbeständigkeit und eine geringe Emission an VOC aufweist.

Erfindungsgemäß gelöst wird diese Aufgabe durch ein Verfahren zur Herstellung von Polyurethanweichschaumstoffen wie in Anspruch 1 oder 2 beansprucht.

Dabei haben die Erfinder der vorliegenden Erfindung überraschend gefunden, dass Schaumstoffe auf Basis eines POM-basierten Polyethers mit OH-Zahl von weniger als 56 mg KOH/g sich günstiger verhalten als solche auf Basis eines POM-basierten Polyethers mit einer OH-Zahl von 59 mg KOH/g, obwohl letztere 3-4% höhere POM-Gehalte aufweisen. Ferner wurde überraschend gefunden, dass die erfindungsgemäßen Prepolymere eine günstigere Viskosität aufweisen.

In der vorliegenden Erfindung werden die Anteile an Polyoxymethyleneinheiten über eine GPC-Messung gekoppelt mit einer NMR Messung bestimmt.

Die für die Komponenten A1 bis A5, A11 bis A15 und B, B1, B2 beschriebenen Aspekte können auf alle Ausführungsformen angewendet werden. Ist zum Beispiel eine bevorzugte Ausführungsform von A1 beschrieben, so ist dies in Kombination mit dem Verfahren zur Herstellung als auch mit dem Zweikomponentensystem beschrieben.

Die erfindungsgemäßen Zweikomponentensysteme enthalten zumindest einen Katalysator. Dieser kann der Komponente A oder B zugefügt sein oder unmittelbar vor oder bei der Vermischung der Komponenten A und B zugefügt werden.

Insbesondere betrifft die Erfindung die folgenden Ausführungsformen:
1. Verfahren zur Herstellung von Polyurethanweichschaumstoffen, welche bevorzugt einen Gehalt von 5 bis 150 g/kg Polyoxymethylen aufweisen, durch Umsetzung einer Komponente A enthaltend oder bestehend aus
   A1 5 bis 85 Gew.-Teile, bevorzugt 30 bis 75 Gew.-Teile, mindestens eines Polyoxymethylen-Polyoxyalkylen-Blockcopolymers mit einer Hydroxylzahl gemäß DIN EN ISO 4629-1:2016-12 von 5 mg KOH/g bis 56 mg KOH/g, bevorzugt 35 bis 50, stärker bevorzugt 38 bis 48 mg KOH/g, wobei die beiden Polyoxyalkylenblöcke endständig sind;
   A2 0 bis 95 Gew.-Teile, bevorzugt 15 bis 95 Gew.-Teile, stärker bevorzugt 25 bis 70 Gew.-Teile, mindestens einer Verbindung mit 2 bis 6 Zerewitinoff-aktiven H-Atomen ausgewählt aus der Gruppe der Polyetherpolyole, Polyesterpolyole, Polyetheresterpolyole, Polycarbonatpolyole und/oder Polyacrylatpolyole, bevorzugt mit einer Hydroxylzahl gemäß DIN EN ISO 4629-1:2016-12 von 26 bis 56 mg KOH/g;
   A3 0,1 bis 25 Gew.-Teile, bevorzugt 2 bis 5 Gew.-Teile, bezogen auf die Summe der Gew.-Teile der Komponenten A1 und A2, Wasser und/oder physikalische Treibmittel,
   A4 0 bis 10 Gew.-Teile, bevorzugt 0,15 bis 1,5 Gew.-Teile, bezogen auf die Summe der Gew.-Teile der Komponenten A1 und A2, wenigstens einer Verbindung mit mindestens 2 Zerewitinoff-aktiven H-Atomen, die von A2 verschieden ist, wobei die Verbindung vorzugsweise ein Vernetzer ist, stärker bevorzugt ausgewählt aus Diethanolamin und Glyzerin oder Mischungen davon;
   A5 0 bis 10 Gew.-Teile, bevorzugt 0,1 bis 5 Gew.-Teile, bezogen auf die Summe der Gew.-Teile der Komponenten A1 und A2, Hilfs- und Zusatzstoffe, bevorzugt aus gewählt aus Schaumstabilisatoren, Antioxidantien, Flammschutzmitteln, Farbmitteln und Mischungen davon;
      mit einer Komponente B enthaltend oder bestehend aus
   B1 mindestens ein Di- und/oder Polyisocyanat mit einer mittleren NCO Funktionalität von 2,0 bis 2,6, bevorzugt 2,0 bis 2,3;
   wobei die Umsetzung der Komponente A mit der Komponente B in Gegenwart eines Katalysators und bei einer Isocyanat-Kennzahl von 50 bis 130, bevorzugt 60 bis 110, stärker bevorzugt 70 bis 90, durchgeführt wird und wobei alle Gewichtsteilangaben der Komponenten A1 bis A5 so normiert sind, dass die Summe der Gewichtsteile A1 + A2 in der Zusammensetzung 100 ergibt.
2. Verfahren zur Herstellung von Polyurethanweichschaumstoffen, welche bevorzugt einen Gehalt von 5 bis 150 g/kg Polyoxymethylen aufweisen, durch Umsetzung einer Komponente A enthaltend oder bestehend aus
   A11 0 bis 85 Gew.-Teile, bevorzugt 30 bis 75 Gew.-Teile, mindestens eines Polyoxymethylen-Polyoxyalkylen-Blockcopolymers mit bevorzugt einer Hydroxylzahl gemäß DIN EN ISO 4629-1:2016-12 von 5 mg KOH/g bis 56 mg KOH/g, stärker bevorzugt 35 bis 50, noch stärker bevorzugt 38 bis 48 mg KOH/g, wobei die beiden Polyoxyalkylenblöcke endständig sind;
   A12 0 bis 100 Gew.-Teile, bevorzugt 15 bis 100 Gew.-Teile, stärker bevorzugt 25 bis 70 Gew.-Teile, mindestens einer Verbindung mit 2 bis 6 Zerewitinoff-aktiven H-Atomen ausgewählt aus der Gruppe der Polyetherpolyole, Polyesterpolyole, Polyetheresterpolyole, Polycarbonatpolyole und/oder Polyacrylatpolyole, bevorzugt mit einer Hydroxylzahl gemäß DIN EN ISO 4629-1:2016-12 von 26 bis 56 mg KOH/g;
   A13 0,1 bis 25 Gew.-Teile, bevorzugt 2 bis 5 Gew.-Teile, bezogen auf die Summe der Gew.-Teile der Komponenten A11 und A12, Wasser und/oder physikalische Treibmittel,
   A14 0 bis 10 Gew.-Teile, bevorzugt 0,15 bis 1,5 Gew.-Teile, bezogen auf die Summe der Gew.-Teile der Komponenten A11 und A12, wenigstens einer Verbindung mit mindestens 2 Zerewitinoff-aktiven H-Atomen, die von A2 verschieden ist, wobei die Verbindung vorzugsweise ein Vernetzer ist, stärker bevorzugt ausgewählt aus Diethanolamin und Glyzerin oder Mischungen davon;
   A15 0 bis 10 Gew.-Teile, bevorzugt 0,1 bis 5 Gew.-Teile, bezogen auf die Summe der Gew.-Teile der Komponenten A11 und A12, Hilfs- und Zusatzstoffe, bevorzugt aus gewählt aus Schaumstabilisatoren, Antioxidantien, Flammschutzmitteln, Farbmitteln und Mischungen davon; mit einer Komponente B enthaltend oder bestehend aus
   B2 mindestens einem Prepolymer mit einem NCO-Gehalt von 18-40 Gew.-% NCO, bevorzugt 23,5-29,5 Gew.-% NCO, dass durch Umsetzen von
   A1 5 bis 18 Gew.-Teile, bevorzugt 10 bis 15 Gew.-Teile, mindestens eines Polyoxymethylen-Polyoxyalkylen-Blockcopolymers mit einer Hydroxylzahl gemäß DIN EN ISO 4629-1:2016-12 von 5 mg KOH/g bis 56 mg KOH/g, bevorzugt 28 bis 50, stärker bevorzugt 37 bis 48 mg KOH/g, wobei die beiden Polyoxyalkylenblöcke endständig sind;
   A2 gegebenenfalls weiteren Isocyanat-reaktiven oder inerten Komponenten, die kein Polyoxymethylen enthalten
      mit
   B1 mindestens einem Di- und/oder Polyisocyanat mit einer mittleren NCO Funktionalität von 2,0 bis 2,6, gegebenenfalls in Gegenwart eines Katalysators, erhalten wird, wobei sich die Gewichtsteile von B1 auf die Summe der Gewichtsteile von A1 und A2 bezieht, die auf 100 Gewichtssteile normiert werden;
   wobei die Umsetzung der Komponente A mit der Komponente B in Gegenwart eines Katalysators und bei einer Isocyanat-Kennzahl von 50 bis 130, bevorzugt 60 bis 110, stärker bevorzugt 70 bis 90, durchgeführt wird und wobei alle Gewichtsteilangaben der Komponenten A11 bis A15 so normiert sind, dass die Summe der Gewichtsteile A11 + A12 in der Zusammensetzung 100 ergibt.
3. Verfahren nach einer der vorstehenden Ausführungsformen, dadurch gekennzeichnet, dass der Polyoxymethylenblock des Polyoxymethylen-Polyoxyalkylen-Blockcopolymers A1 und/oder A11 ein gewichtsmittleres Molekulargewicht von 62 bis 30.000 g/mol, bevorzugt 242 bis 3.000 g/mol, stärker bevorzugt 400 bis 1.500 g/mol aufweist, gemessen mittels Gelpermeationschromatographie unter der Verwendung von Polystyrolstandards.
4. Verfahren nach einer der vorstehenden Ausführungsformen, dadurch gekennzeichnet, dass das Polyoxymethylen-Polyoxyalkylen-Blockcopolymer A1 und/oder A11 folgende Formel (I) aufweist:

   HO-(AlkO)ₓ-(CH₂O)ₙ-(AlkO)_{y}-OH (I),

   wobei
   AlkO eine Struktureinheit ist, die sich unabhängig voneinander in jeder Struktureinheit von Ethylenoxid, Propylenoxid, Butylenoxid oder Styroloxid ableitet;
   x 2 bis 100, bevorzugt 3 bis 60, stärker bevorzugt 4 bis 20, ist;
   y 2 bis 100, bevorzugt 3 bis 60, stärker bevorzugt 4 bis 20, ist; und
   n = 5 bis 100, bevorzugt 10 bis 50, stärker bevorzugt 11 bis 25, ist; besonders bevorzugt ist x = y.
5. Verfahren nach einer der vorstehenden Ausführungsformen, dadurch gekennzeichnet, dass A2 oder A12 ein Polypropylenoxid-Polyethylenoxid-Blockcopolymer mit einer mittleren Funktionalität zwischen 2,7 und 6, mit einer Hydroxylzahl gemäß DIN EN ISO 4629-1:2016-12 von 26 mg KOH/g bis 56 mg KOH/g und einem Verhältnis von Propylenoxid zu Ethylenoxid von 0,1 bis 9:1 ist.
6. Verfahren nach einem der vorstehenden Aspekten, dadurch gekennzeichnet, dass sich das mindestens eine Di- und/oder Polyisocyanat B1 von MDI oder TDI oder Mischungen davon ableitet.
7. Verfahren nach einer der vorstehenden Ausführungsformen, dadurch gekennzeichnet, dass der Katalysator ein Katalysator ist, der mit Isocyanat zu Urethanen, Harnstoffen, Allophanaten oder Biureten reagiert, bevorzugt sind dabei Katalysatoren, die über eine Hydroxyl- oder über eine primäre oder sekundäre Aminofunktion in das Polyurethan eingebaut werden können.
9. Polyurethanweichschaumstoff erhältlich durch ein Verfahren gemäß einer der Ausführungsformen 1 bis 8.
10. Polyurethanweichschaumstoff gemäß Ausführungsform 9, dadurch gekennzeichnet, dass er eine Rohdichte von 0,02 bis 0,8 kg/dm³, bevorzugt 0,04 bis 0,14 kg/dm³, gemessen mittels DIN ISO 845:2009-10 aufweist.
11. Polyurethanweichschaumstoff gemäß Ausführungsform 9 oder 10, dadurch gekennzeichnet, dass er die Anforderungen nach Richtlinie 95/28/EG und der Norm FMVSS 302 an die horizontale Brenngeschwindigkeit erfüllt.
12. Verwendung des Polyurethanweichschaumstoffs gemäß einer der Ausführungsformen 9 bis 11 zur Herstellung von Möbelpolsterungen, Textileinlagen, Matratzen, Automobilsitze, Kopfstützen, Armlehnen, Schwämmen, Schaumstofffolien zur Verwendung in Automobilteilen wie beispielsweise Dachhimmeln, Türseitenverkleidungen, Sitzauflagen und Bauelementen.
13. Zweikomponentensystem zur Herstellung von Polyurethanweichschaumstoffen aus einer Komponente A enthaltend oder bestehend aus
   A1 5 bis 85 Gew.-Teile, bevorzugt 30 bis 75 Gew.-Teile, mindestens eines Polyoxymethylen-Polyoxyalkylen-Blockcopolymers mit einer Hydroxylzahl gemäß DIN EN ISO 4629-1:2016-12 von 5 mg KOH/g bis 56 mg KOH/g, bevorzugt 35 bis 50, stärker bevorzugt 38 bis 48 mg KOH/g, wobei die beiden Polyoxyalkylenblöcke endständig sind;
   A2 0 bis 95 Gew.-Teile, bevorzugt 15 bis 95 Gew.-Teile, stärker bevorzugt 25 bis 70 Gew.-Teile, mindestens einer Verbindung mit 2 bis 6 Zerewitinoff-aktiven H-Atomen ausgewählt aus der Gruppe der Polyetherpolyole, Polyesterpolyole, Polyetheresterpolyole, Polycarbonatpolyole und/oder Polyacrylatpolyole, bevorzugt mit einer Hydroxylzahl gemäß DIN EN ISO 4629-1:2016-12 von 26 bis 56 mg KOH/g;
   A3 0,1 bis 25 Gew.-Teile, bevorzugt 2 bis 5 Gew.-Teile, bezogen auf die Summe der Gew.-Teile der Komponenten A1 und A2, Wasser und/oder physikalische Treibmittel,
   A4 0 bis 10 Gew.-Teile, bevorzugt 0,15 bis 1,5 Gew.-Teile, bezogen auf die Summe der Gew.-Teile der Komponenten A1 und A2, wenigstens einer Verbindung mit mindestens 2 Zerewitinoff-aktiven H-Atomen, die von A2 verschieden ist, wobei die Verbindung vorzugsweise ein Vernetzer ist, stärker bevorzugt ausgewählt aus Diethanolamin und Glyzerin oder Mischungen davon;
   A5 0 bis 10 Gew.-Teile, bevorzugt 0,1 bis 5 Gew.-Teile, bezogen auf die Summe der Gew.-Teile der Komponenten A1 und A2, Hilfs- und Zusatzstoffe, bevorzugt aus gewählt aus Schaumstabilisatoren, Antioxidantien, Flammschutzmitteln, Farbmitteln und Mischungen davon;
      und einer Komponente B enthaltend oder bestehend aus
   B1 mindestens ein Di- und/oder Polyisocyanat mit einer mittleren NCO Funktionalität von 2,0 bis 2,6, bevorzugt 2,0 bis 2,3;
      und wenigstens eines Katalysators, wobei die Komponente A und die Komponente B in einem Verhältnis einer Isocyanat-Kennzahl von 50 bis 130 zueinander vorliegen, bevorzugt 60 bis 110, stärker bevorzugt 70 bis 90, und wobei alle Gewichtsteilangaben der Komponenten A1 bis A5 so normiert sind, dass die Summe der Gewichtsteile A1 + A2 in der Zusammensetzung 100 ergibt.
14. Zweikomponentensystem zur Herstellung von Polyurethanweichschaumstoffen aus einer Komponente A enthaltend oder bestehend aus
   A11 0 bis 85 Gew.-Teile, bevorzugt 30 bis 75 Gew.-Teile, mindestens eines Polyoxymethylen-Polyoxyalkylen-Blockcopolymers bevorzugt mit einer Hydroxylzahl gemäß DIN EN ISO 4629-1:2016-12 von 5 mg KOH/g bis 56 mg KOH/g, stärker bevorzugt 35 bis 50, noch stärker bevorzugt 38 bis 48 mg KOH/g, wobei die beiden Polyoxyalkylenblöcke endständig sind;
   A12 0 bis 100 Gew.-Teile, bevorzugt 15 bis 100 Gew.-Teile, stärker bevorzugt 25 bis 70 Gew.-Teile, mindestens einer Verbindung mit 2 bis 6 Zerewitinoff-aktiven H-Atomen ausgewählt aus der Gruppe der Polyetherpolyole, Polyesterpolyole, Polyetheresterpolyole, Polycarbonatpolyole und/oder Polyacrylatpolyole, bevorzugt mit einer Hydroxylzahl gemäß DIN EN ISO 4629-1:2016-12 von 26 bis 56 mg KOH/g;
   A13 0,1 bis 25 Gew.-Teile, bevorzugt 2 bis 5 Gew.-Teile, bezogen auf die Summe der Gew.-Teile der Komponenten A11 und A12, Wasser und/oder physikalische Treibmittel;
   A14 0 bis 10 Gew.-Teile, bevorzugt 0,15 bis 1,5 Gew.-Teile, bezogen auf die Summe der Gew.-Teile der Komponenten A11 und A12, wenigstens einer Verbindung mit mindestens 2 Zerewitinoff-aktiven H-Atomen, die von A2 verschieden ist, wobei die Verbindung vorzugsweise ein Vernetzer ist, stärker bevorzugt ausgewählt aus Diethanolamin und Glyzerin oder Mischungen davon;
   A15 0 bis 10 Gew.-Teile, bevorzugt 0,1 bis 5 Gew.-Teile, bezogen auf die Summe der Gew.-Teile der Komponenten A11 und A12, Hilfs- und Zusatzstoffe, bevorzugt aus gewählt aus Schaumstabilisatoren, Antioxidantien, Flammschutzmitteln, Farbmitteln und Mischungen davon; mit einer Komponente B enthaltend oder bestehend aus
   B2 mindestens ein Prepolymer mit einem NCO-Gehalt von 18-40 Gew.-% NCO, bevorzugt 23,5-29,5 Gew.-% NCO, dass durch Umsetzen von
   A1 5 bis 18 Gew.-Teile, bevorzugt 10 bis 15 Gew.-Teile, mindestens eines Polyoxymethylen-Polyoxyalkylen-Blockcopolymers mit einer Hydroxylzahl gemäß DIN EN ISO 4629-1:2016-12 von 5 mg KOH/g bis 56 mg KOH/g, bevorzugt 28 bis 50, stärker bevorzugt 37 bis 48 mg KOH/g, wobei die beiden Polyoxyalkylenblöcke endständig sind;
   A2 gegebenenfalls weiteren Isocyanat-reaktiven oder inerten Komponenten, die kein Polyoxymethylen enthalten;
   B1 mindestens einem Di- und/oder Polyisocyanat mit einer mittleren NCO Funktionalität von mindestens 2,0 bis 2,6, gegebenenfalls in Gegenwart eines Katalysators, erhältlich ist, wobei sich die Gewichtsteile von B1 auf die Summe der Gewichtsteile von A1 und A2 bezieht, die auf 100 Gewichtssteile normiert werden;
   und wenigstens eines Katalysators, wobei die Komponente A und die Komponente B in einem Verhältnis einer Isocyanat-Kennzahl von 50 bis 130 zueinander vorliegen, bevorzugt 60 bis 110, stärker bevorzugt 70 bis 90, und wobei alle Gewichtsteilangaben der Komponenten A11 bis A15 so normiert sind, dass die Summe der Gewichtsteile A11 + A12 in der Zusammensetzung 100 ergibt.

In bevorzugten Ausführungsformen ist kein Polyoxymethylen-Polyoxyalkylen-Blockcopolymer mit einer Hydroxylzahl gemäß DIN EN ISO 4629-1:2016-12 von mehr als 56 mg KOH/g enthalten.

Die Isocyanatkomponente B1 kann insbesondere ein aliphatisches oder aromatisches Di- oder Polyisocyanat umfassen. Beispiele sind 1,4-Butylendiisocyanat, 1,5-Pentandiisocyanat, 1,6-Hexamethylendiisocyanat (HDI) bzw. deren Dimere, Trimere, Pentamere, Heptamere oder Nonamere oder Gemische derselben, Isophorondiisocyanat (IPDI), 2,2,4- und/oder 2,4,4-Trimethylhexamethylendiisocyanat, die isomeren Bis(4,4'-isocyanatocyclohexyl)methane oder deren Mischungen beliebigen Isomerengehalts, 1,4-Cyclohexylendiisocyanat, 1,4-Phenylendiisocyanat, 2,4- und/oder 2,6-Toluylendiisocyanat (TDI), 1,5-Naphthylendiisocyanat, 2,2'-und/oder 2,4'- und/oder 4,4'-Diphenylmethandiisocyanat (MDI) und/oder höhere Homologe (polymeres MDI), 1,3- und/oder 1,4-Bis-(2-isocyanato-prop-2-yl)-benzol (TMXDI), 1,3-Bis-(isocyanatomethyl)benzol (XDI), sowie Alkyl-2,6-diisocyanatohexanoate (Lysindiisocyanate) mit C₁ bis C₆-Alkylgruppen. Bevorzugt ist TDI und/oder MDI.

Neben den vorstehend genannten Polyisocyanaten können anteilig auch modifizierte Diisocyanate mit Uretdion-, Isocyanurat-, Urethan-, Carbodiimid, Uretonimin, Allophanat-, Biuret-, Amid-, Iminooxadiazindion- und/oder Oxadiazintrionstruktur sowie nicht-modifiziertes Polyisocyanat mit mehr als 2 NCO-Gruppen pro Molekül wie zum Beispiel 4-Isocyanatomethyl-1,8-octandiisocyanat (Nonantriisocyanat) oder Triphenylmethan-4,4',4"-triisocyanat mit eingesetzt werden.

Dem Fachmann ist die Herstellung von Polyoxymethylen-Polyoxyalkylen-Blockcopolymer zum Beispiel aus der WO 2004/096746 A1 und der EP 14163744.

Der Polyoxyalkylenblock im Polyoxymethylen-Polyoxyalkylen-Blockcopolymer leitet sich vorzugsweise von Ethylenoxid, Propylenoxid, Butylenoxid und/oder Styroloxid ab.

Hinsichtlich des Formaldehyds in der Herstellung des Polyoxymethylen-Polyoxyalkylen-Blockcopolymers lässt sich anmerken, dass Formaldehyd in gasförmigem Zustand, ggf. als Mischung mit Inertgasen wie z.B. Stickstoff oder Argon oder als Mischung mit gasförmigem, überkritischem oder flüssigem Kohlendioxid, oder als Formaldehyd-Lösung eingesetzt werden kann. Bei Formaldehyd-Lösungen kann es sich um wässrige Formaldehyd-Lösungen mit einem Formaldehyd-Gehalt zwischen 1 Gew.-% und 37 Gew.-% handeln, die gegebenenfalls bis zu 15 Gew.-% Methanol als Stabilisator enthalten können. Alternativ können Lösungen von Formaldehyd in polaren organischen Lösungsmitteln wie z.B. Methanol oder höheren ein- oder mehrwertigen Alkoholen, 1,4-Dioxan, Acetonitril, N,N-Dimethylformamid (DMF), N,N-Dimethylacetamid, Dimethylsulfoxid (DMSO), zyklischen Carbonaten, z.B. Ethylencarbonat oder Propylencarbonat, N Methylpyrrolidon (NMP), Sulfolan, Tetramethylharnstoff, N,N'-Dimethylethylenharnstoff oder Mischungen derselben untereinander, mit Wasser und/oder anderen Lösungsmitteln eingesetzt werden. Die Anwesenheit weiterer Substanzen in Lösung ist ebenfalls mit eingeschlossen. Bevorzugt ist der Einsatz von Gemischen von gasförmigem Formaldehyd mit Argon oder Kohlendioxid. Ebenfalls bevorzugt ist der Einsatz von Lösungen von Formaldehyd in aprotischen polaren organischen Lösungsmitteln wie z.B. 1,4-Dioxan, Acetonitril, N,N-Dimethylformamid (DMF), N,N-Dimethylacetamid, Dimethylsulfoxid (DMSO), zyklischen Carbonaten, z.B. Ethylencarbonat oder Propylencarbonat, N Methylpyrrolidon (NMP), Sulfolan, Tetramethylharnstoff, N,N'-Dimethylethylenharnstoff oder Mischungen derselben untereinander, und/oder anderen Lösungsmitteln.

Alternativ kann Formaldehyd *in situ* aus einer geeigneten Formaldehyd-Quelle generiert werden. Als Formaldehyd-Quelle können Substanzen zum Einsatz kommen, welche chemisch gebundenen Formaldehyd, üblicherweise in Form von Oxymethylen-Gruppen, enthalten, und die unter geeigneten Bedingungen in der Lage sind, Formaldehyd freizusetzen. Geeignete Bedingungen für die Freisetzung können z.B. erhöhte Temperaturen und/oder den Einsatz von Katalysatoren und/oder die Gegenwart von Säuren, Basen oder anderen Reagenzien, die zu der Freisetzung von monomerem Formaldehyd führen, beinhalten. Bevorzugte Formaldehyd-Quellen sind 1,3,5-Trioxan, Paraformaldehyd, Polyoxymethylen, Dimethylacetal, 1,3-Dioxolan, 1,3-Dioxan und/oder 1,3-Dioxepan, besonders bevorzugt sind 1,3,5-Trioxan und Paraformaldehyd.

Es kann auch eine oligomeren Formaldehyd-Vorstufe verwendet werden, welche chemisch gebundenen Formaldehyd, üblicherweise in Form von Oxymethylen-Gruppen, enthalten, und die unter geeigneten Bedingungen in der Lage sind, Formaldehyd freizusetzen. Geeignete Bedingungen für die Freisetzung können z.B. erhöhte Temperaturen und/oder den Einsatz von Katalysatoren und/oder die Gegenwart von Säuren, Basen oder anderen Reagenzien, die zu der Freisetzung von monomerem Formaldehyd führen, beinhalten. Bevorzugte Formaldehyd-Quellen sind 1,3,5-Trioxan, Dimethylacetal, 1,3-Dioxolan, 1,3-Dioxan und/oder 1,3-Dioxepan.

Alternativ lassen sich Polyoxymethylen-Polyoxyalkylen-Blockcopolymere durch katalytische Anlagerung von Alkylenoxiden sowie gegebenenfalls weiteren Comonomeren an polymere Formaldehyd-Starterverbindungen in Gegenwart eines Doppelmetallcyanid (DMC)-Katalysators, wie in EP 14163744 beschrieben, herstellen.

Dabei eignen sich als polymere Formaldehyd-Starterverbindung grundsätzlich solche oligomeren und polymeren Formen des Formaldehyds, welche wenigstens eine terminale Hydroxylgruppe zur Reaktion mit den Alkylenoxiden und den gegebenenfalls weiteren Comonomeren aufweisen. Unter dem Begriff "terminale Hydroxylgruppe" wird insbesondere eine terminale Halbacetal-Funktionalität verstanden, welche sich als Strukturmerkmal über die Polymerisation des Formaldehyds ergibt. Beispielsweise können die Starterverbindungen Oligomere und Polymere des Formaldehyds der allgemeinen Formel HO-(CH₂O)ₙ-H sein, wobei n für eine ganze Zahl ≥ 2 steht und wobei polymeres Formaldehyd typischerweise n > 8 Wiederholungseinheiten aufweist.

Geeignete polymere Formaldehyd-Starterverbindungen weisen bevorzugt Molmassen von 62 bis 30000 g/mol, stärker bevorzugt von 62 bis 12000 g/mol, besonders bevorzugt von 242 bis 6000 g/mol und ganz besonders bevorzugt von 242 bis 3000 g/mol auf und umfassen bevorzugt von 2 bis 1000, stärker bevorzugt von 2 bis 400, besonders bevorzugt von 8 bis 200 und ganz besonders bevorzugt von 8 bis 100 Oxymethylen-Wiederholungseinheiten. Die eingesetzten Starterverbindungen haben typischerweise eine Funktionalität (F) von 1 bis 3, in bestimmten Fällen können diese aber auch höherfunktionell sein, also eine Funktionalität > 3 besitzen. Bevorzugt werden offenkettige polymere Formaldehyd-Starterverbindungen mit terminalen Hydroxylgruppen eingesetzt, welche eine Funktionalität von 1 bis 10, bevorzugt von 1 bis 5, besonders bevorzugt von 2 bis 3 haben. Ganz besonders bevorzugt werden lineare polymere Formaldehyd-Starterverbindungen eingesetzt, welche eine Funktionalität von 2 aufweisen. Die Funktionalität F entspricht der Anzahl an OH-Endgruppen pro Molekül.

Die Herstellung der polymeren Formaldehyd-Starterverbindungen kann nach bekannten Verfahren erfolgen (vgl. z.B. M. Haubs *et. al*., 2012, Polyoxymethylenes, Ullmann's Encyclopedia of Industrial Chemistry; G. Reus *et. al*., 2012, Formaldehyde, *ibid*). Die Formaldehyd-Starterverbindungen können grundsätzlich auch in Form eines Copolymers eingesetzt werden, wobei als Comonomere neben Formaldehyd beispielsweise 1,4-Dioxan, oder 1,3-Dioxolan einpolymerisiert sind. Weitere geeignete Formaldehyd-Copolymere sind Copolymere des Formaldehyds sowie des Trioxans mit cyclischen und/oder linearen Formalen, wie beispielsweise Butandiolformal, oder Epoxiden. Es ist ebenfalls denkbar, dass als Comonomere höhere homologe Aldehyde, wie beispielweise Acetaldehyd, Propionaldehyd, etc., in das Formaldehyd-Polymer eingebaut sind. Ebenfalls ist es denkbar, dass Formaldehyd-Starterverbindungen wiederum ausgehend von H-funktionellen Starterverbindungen hergestellt werden, insbesondere lassen sich hierbei durch den Einsatz von mehrwertigen Starterverbindungen polymere Formaldehyd-Starterverbindungen mit einer Hydroxy-Endgruppen-Funktionalität F > 2 erhalten (vgl. z.B. WO 1981001712 A1, Bull. Chem. Soc. J., 1994, 67, 2560-2566, US 3436375, JP 03263454, JP 2928823).

Es können auch Gemische unterschiedlicher polymerer Formaldehyd-Starterverbindungen oder Gemische mit anderen H-funktionellen Starterverbindungen eingesetzt werden. Als geeignete H-funktionelle Startersubstanz ("Starter") können Verbindungen mit für die Alkoxylierung aktiven H-Atomen eingesetzt werden, die bevorzugt eine Molmasse von 18 bis 4500 g/mol, stärker bevorzugt von 62 bis 2500 g/mol und besonders bevorzugt von 62 bis 1000 g/mol aufweisen. Für die Alkoxylierung aktive Gruppen mit aktiven H-Atomen sind beispielsweise -OH, -NH₂ (primäre Amine), -NH- (sekundäre Amine), -SH und -CO₂H, bevorzugt sind -OH und -NH₂, besonders bevorzugt ist -OH. Als H-funktionelle Startersubstanz wird beispielsweise eine oder mehrere Verbindungen ausgewählt aus der Gruppe bestehend aus ein- oder mehrwertigen Alkoholen, mehrwertigen Aminen, mehrwertigen Thiolen, Aminoalkohole, Thioalkohole, Hydroxyester, Polyetherpolyole, Polyesterpolyole, Polyesteretherpolyole, Polyethercarbonatpolyole, Polycarbonatpolyole, Polycarbonate, Polyethylenimine, Polyetheramine, Polytetrahydrofurane (z. B. PolyTHF® der BASF), Polytetrahydrofuranamine, Polyetherthiole, Polyacrylatpolyole, Ricinusöl, das Mono- oder Diglycerid von Ricinolsäure, Monoglyceride von Fettsäuren, chemisch modifizierte Mono-, Di- und/oder Triglyceride von Fettsäuren, und C₁-C₂₄ Alkyl-Fettsäureester, die im Mittel mindestens 2 OH-Gruppen pro Molekül enthalten, eingesetzt.

Bekanntlich polymerisiert Formaldehyd bereits durch die Gegenwart geringer Wasserspuren. In wässriger Lösung bildet sich daher in Abhängigkeit von Konzentration und Temperatur der Lösung ein Gemisch von Oligomeren und Polymeren unterschiedlicher Kettenlängen, welche mit molekularem Formaldehyd und Formaldehyd-Hydrat im Gleichgewicht stehen. Sogenanntes Paraformaldehyd fällt hierbei als ein weißer, schlecht-löslicher Feststoff, aus der Lösung aus und stellt in der Regel ein Gemisch linearer Formaldehyd-Polymere mit n = 8 bis 100 Oxymethylen-Wiederholungseinheiten dar.

Es kann polymeres Formaldehyd bzw. sogenanntes Paraformaldehyd, welches kommerziell und kostengünstig erhältlich ist, direkt als Starterverbindung eingesetzt werden. In einer vorteilhaften Ausführungsform wird daher Paraformaldehyd als Starterverbindung eingesetzt. Insbesondere lassen sich über das Molekulargewicht und die Endgruppenfunktionalität der polymeren Formaldehyd-Starterverbindung Polyoxymethylen-Blöcke mit definiertem Molgewicht und Funktionalität in das Produkt einbringen.

Vorteilhafterweise kann hierbei die Länge des Polyoxymethylen-Blocks einfach über das Molekulargewicht der eingesetzten Formaldehyd-Starterverbindung gesteuert werden. Vorzugsweise werden hierbei lineare Formaldehyd-Starterverbindungen der allgemeinen Formel HO-(CH₂O)ₙ-H, wobei n für eine ganze Zahl ≥ 2 steht, bevorzugt mit n= 2 bis 1000, besonders bevorzugt mit n = 2 bis 400 und ganz besonders bevorzugt mit n = 8 bis 100, mit zwei terminalen Hydroxylgruppen eingesetzt. Insbesondere können als Starterverbindung auch Gemische von polymeren Formaldehyd-Verbindungen der Formel HO-(CH₂O)ₙ-H mit jeweils unterschiedlichen Werten für n eingesetzt werden. In einer vorteilhaften Ausführungsform enthalten die eingesetzten Gemische von polymeren Formaldehyd-Starterverbindungen der Formel HO-(CH₂O)ₙ-H wenigstens 1 Gew-%, bevorzugt wenigstens 5 Gew.-% und besonders bevorzugt wenigstens 10 Gew.-% an polymeren Formaldehyd-Verbindungen mit n ≥ 20.

Dabei können insbesondere Polyoxymethylen-Blockcopolymere erhalten werden, welche eine A-B-A Blockstruktur umfassend einen inneren Polyoxymethylen-Block (B) und äußere oligomere Blöcke (A) aufweisen.

Ein Polyoxymethylen-Block im Sinne der Erfindung bezeichnet eine polymere Struktureinheit - (CH₂-O-)ₓ wobei x für eine ganze Zahl ≥ 2 steht, die mindestens eine an zwei Sauerstoffatome gebundene CH₂-Gruppe enthält, welche über mindestens eines der Sauerstoffatome mit weiteren Methylengruppen oder anderen polymeren Strukturen verbunden ist. Bevorzugt enthalten Polyoxymethylen-Blöcke -(CH₂-O-)ₓ durchschnittlich x ≥ 2 bis x ≤ 1000, mehr bevorzugt durchschnittlich x ≥ 2 bis x ≤ 400 und besonders bevorzugt durchschnittlich x ≥ 8 bis x ≤ 100 Oxymethylen-Einheiten. Im Sinne der Erfindung werden unter einem Polyoxymethylen-Block auch solche Blöcke verstanden, welche geringe Anteile weiterer monomerer und/oder oligomerer Einheiten enthalten, im Allgemeinen weniger als 25 mol% bezogen auf die Gesamtmenge der im Block enthaltenen Monomereneinheiten.

Die äußeren oligomeren Blöcke (A) Polyoxyalkylen- oder Polyoxyalkylencarbonat-Blöcke dar, wobei als Polyoxyalkylen-Blöcke im Sinne der Erfindung auch solche Blöcke verstanden werden, in welche (geringe) Anteile weiterer Comonomere, insbesondere Carbonat, im Allgemeinen weniger als 50 mol-%, bevorzugt weniger als 25 mol-%, bezogen auf die Gesamtmenge aller im oligomeren Block vorliegenden Wiederholungseinheiten, einpolymerisiert sind.

Ein Polyoxyalkylencarbonat-Block im Sinne der Erfindung bezeichnet eine polymere Struktureinheit -O[(C₂R¹R²R³R⁴O)ₓ(CO₂)(C₂R¹R²R³R⁴O)_{y}]_{z}-, mit x ≥ 1, y ≥ 0 und z ≥ 1, wobei R¹, R², R³ und R⁴ unabhängig voneinander Wasserstoff, ein gegebenenfalls zusätzliches Heteroatom wie Stickstoff, Sauerstoff, Silizium, Schwefel oder Phosphor enthaltender Alkyl- oder Arylrest sein und sich in verschiedenen Wiederholungseinheiten unterscheiden können. Der Begriff "Alkyl" umfasst allgemein im Zusammenhang der gesamten Erfindung Substituenten aus der Gruppe n-Alkyl wie Methyl, Ethyl oder Propyl, verzweigtes Alkyl und/oder Cycloalkyl. Der Begriff "Aryl" umfasst allgemein im Zusammenhang der gesamten Erfindung Substituenten aus der Gruppe einkernige Carbo- oder Heteroarylsubstituenten wie Phenyl und/oder mehrkernige Carbo- oder Heteroarylsubstituenten, die gegebenenfalls mit weiteren Alkylgruppen und/oder Heteroatomen wie Stickstoff, Sauerstoff, Silizium, Schwefel oder Phosphor substituiert sein können. Die Reste R¹, R², R³ und/oder R⁴ können innerhalb einer Wiederholungseinheit so miteinander verknüpft sein, dass sie zyklische Strukturen ausbilden, wie beispielsweise einen Cycloalkyl-Rest, der über zwei benachbarte Kohlenstoffatome in die Polymerkette eingebaut ist.

Es lassen sich durch das Verfahren ausgehend von Formaldehyd-Starterverbindungen, welche als Gemisch unterschiedlicher Polymerkettenlängen vorliegen, wie beispielsweise Paraformaldehyd, Polyoxymethylen-Copolymere mit einem geringen Gehalt an Neben- und Zersetzungsprodukten und einer engen Molekulargewichtsverteilung erhalten. Ohne an eine bestimmte Theorie gebunden sein zu wollen, ist anzunehmen, dass während des Aktivierungsschrittes des DMC-Katalysators ebenfalls eine Konditionierung der Formaldehyd-Starterverbindung erfolgt, wobei eine Bildung von Neben- und Zersetzungsprodukten, (wie Formiaten, Methoxy-Derivaten, monomerem Formaldehyd), sowie die Defragmentierung des polymeren Formaldehyds zu kürzeren Kettenlängen verhindert und gleichzeitig eine hinreichende Aktivität und Selektivität des Katalysators erreicht wird. Hierbei wird die Formaldehyd-Starterverbindung, welche in thermisch und chemisch labiler und zumeist unlöslicher Halbacetal-Form vorliegt durch die Reaktion mit dem Alkylenoxid in eine thermisch und chemisch stabile Form überführt. Überraschenderweise lässt sich der Schritt der Aktivierung des DMC-Katalysators mit der Konditionierung des polymeren Formaldehyd-Starters kombinieren und besonders vorteilhaft bei unerwartet milden Temperaturen durchführen. Dergleichen war nicht zu erwarten, da DMC-Katalysatoren typischerweise deutlich höhere Temperaturen, beispielsweise von 130 °C, zur Aktivierung benötigen. Die Konditionierung der Formaldehyd-Starterverbindung in Gegenwart des DMC-Katalysators ermöglicht es, dass der Starter im darauffolgenden Polymerisationsschritt auch bei höheren Reaktionstemperaturen mit Alkylenoxiden und den gegebenenfalls weiteren Comonomeren umgesetzt werden kann, ohne dass es dann zu einer weiteren Defragmentierung und/oder der Bildung von Neben- und Zersetzungsprodukten kommt. Ein weiterer Vorteil ist, dass die konditionierte Formaldehyd-Starterverbindung zumeist nach der Konditionierung eine wesentlich höhere Löslichkeit aufweist, so dass nur geringe Mengen oder keine weiteren Lösungs- und/oder Suspensionsmittel benötigt werden.

Weiterhin lässt sich durch das Verfahren sicherstellen, dass ein aktives DMC-Katalysatorsystem für die Polymerisation vorliegt und eine stetig voranschreitende Polymerisation unter kontinuierlicher Zugabe der Comonomere ein sicheres Verfahren sowie hohe Produktqualität sicherstellt.

Die Aktivierung des DMC-Katalysators erfolgt daher in Gegenwart der polymeren Formaldehyd-Starterverbindung. Die Starterverbindung und der DMC-Katalysator können hierbei gegebenenfalls in einem Suspensionsmittel suspendiert sein. Ebenso ist es auch möglich eine weitere flüssige Starterverbindung ("Costarter") im Gemisch einzusetzen, wobei der DMC-Katalysator und die polymere Formaldehyd-Starterverbindung in dieser suspendiert sind.

Die Aktivierung des DMC-Katalysators erfolgt bevorzugt bei einer Aktivierungstemperatur T_{act} im Bereich von 20 bis 120 °C, bevorzugt bei 30 bis 120 °C, besonders bevorzugt bei 40 bis 100 °C und ganz besonders bevorzugt bei 60 bis 100 °C.

Unter "Aktivierung" des DMC-Katalysators ist ein Schritt zu verstehen, bei dem eine Teilmenge Alkylenoxid bei der spezifischen Aktivierungstemperatur zur DMC-Katalysator-Suspension zugegeben wird und dann die Zugabe des Alkylenoxids unterbrochen wird, wobei aufgrund einer folgenden exothermen chemischen Reaktion eine Wärmeentwicklung, die zu einer Temperaturspitze ("Hotspot") führen kann, sowie aufgrund der Umsetzung von Alkylenoxid ein Druckabfall im Reaktor beobachtet wird.

Für das Verfahren geeignete DMC-Katalysatoren zur Verwendung in der Homopolymerisation von Alkylenoxiden sind im Prinzip aus dem Stand der Technik bekannt (siehe z.B. US-A 3 404 109, US-A 3 829 505, US-A 3 941 849 und US-A 5 158 922). DMC-Katalysatoren, die z.B. in US-A 5 470 813, EP-A 700 949, EP-A 743 093, EP-A 761 708, WO 97/40086, WO 98/16310 und WO 00/47649 beschrieben sind, besitzen eine sehr hohe Aktivität in der Polymerisation von Alkylenoxiden und ggf. der Copolymerisation von Alkylenoxiden mit geeigneten Comonomeren und ermöglichen die Herstellung von Polyoxymethylen-Copolymeren bei sehr geringen Katalysatorkonzentrationen, so dass eine Abtrennung des Katalysators aus dem fertigen Produkt i. a. nicht mehr erforderlich ist. Ein typisches Beispiel sind die in EP-A 700 949 beschriebenen hochaktiven DMC-Katalysatoren, die neben einer Doppelmetallcyanid-Verbindung (z.B. Zinkhexacyanocobaltat(III)) und einem organischen Komplexliganden (z.B. tert.-Butanol) noch einen Polyether mit einem zahlenmittlerem Molekulargewicht größer als 500 g/mol enthalten.

Die Konzentration an eingesetztem DMC-Katalysator beträgt 10 bis 10000 ppm, besonders bevorzugt 20 bis 5000 ppm und höchst bevorzugt 50 bis 2000 ppm, bezogen auf die Masse des herzustellenden Polyoxymethylen-Block-Copolymers. Je nach Anforderungsprofil der nachgeschalteten Anwendung kann der DMC-Katalysator im Produkt belassen oder (teilweise) abgetrennt werden. Die (teilweise) Abtrennung des DMC-Katalysators kann beispielsweise durch Behandlung mit Adsorbentien und/oder Filtration erfolgen. Verfahren zur Abtrennung von DMC-Katalysatoren sind beispielsweise beschrieben in US-A-4,987,271, DE-A-3132258, EP-A-0 406 440, US-A-5,391,722, US-A-5,099,075, US-A-4,721,818, US-A-4,877,906 und EP-A-0 385 619.

Als Epoxid (Alkylenoxid) werden für die Herstellung der Polyoxymethylen-Blockcopolymere Verbindungen der allgemeinen Formel (I): 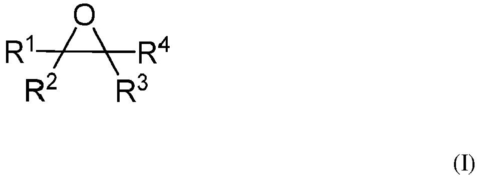 eingesetzt, wobei R¹, R², R³ und R⁴ unabhängig voneinander für Wasserstoff oder einen gegebenenfalls zusätzliche Heteroatome wie Stickstoff, Sauerstoff, Silizium, Schwefel oder Phosphor enthaltenden Alkyl- oder Arylrest stehen und ggf. so miteinander verknüpft sein können, dass sie zyklische Strukturen ausbilden, wie beispielsweise ein Cycloalkylenoxid.

Im Rahmen des Verfahrens können grundsätzlich solche Alkylenoxide eingesetzt werden, welche sich für die Polymerisation in Gegenwart eines DMC-Katalysators eignen. Werden verschiedene Alkylenoxide verwendet, so können diese entweder als Mischung oder nacheinander zudosiert werden. Bei letzterer Dosierweise können die Polyetherketten des hierüber erhaltenen Polyoxymethylen-Polyoxyalkylen-Blockcopolymers ihrerseits ebenfalls eine Blockstruktur aufweisen.

Allgemein können für das Verfahren Alkylenoxide (Epoxide) mit 2-24 Kohlenstoffatomen eingesetzt werden. Bei den Alkylenoxiden mit 2-24 Kohlenstoffatomen handelt es sich beispielsweise um eine oder mehrere Verbindungen ausgewählt aus der Gruppe bestehend aus Ethylenoxid, Propylenoxid, 1-Butenoxid, 2,3-Butenoxid, 2-Methyl-1,2-propenoxid (Isobutenoxid), 1-Pentenoxid, 2,3-Pentenoxid, 2-Methyl-1,2-butenoxid, 3-Methyl-1,2-butenoxid, 1-Hexenoxid, 2,3-Hexenoxid, 3,4-Hexenoxid, 2-Methyl-1,2-pentenoxid, 4-Methyl-1,2-pentenoxid, 2-Ethyl-1,2-butenoxid, 1-Heptenoxid, 1-Octenoxid, 1-Nonenoxid, 1-Decenoxid, 1-Undecenoxid, 1-Dodecenoxid, 4-Methyl-1,2-pentenoxid, Butadienmonoxid, Isoprenmonoxid, Cyclopentenoxid, Cyclohexenoxid, Cycloheptenoxid, Cyclooctenoxid, Styroloxid, Methylstyroloxid, Pinenoxid, ein- oder mehrfach epoxidierte Fette als Mono-, Di- und Triglyceride, epoxidierte Fettsäuren, C₁-C₂₄-Ester von epoxidierten Fettsäuren, Epichlorhydrin, Glycidol, und Derivate des Glycidols wie beispielsweise Methylglycidylether, Ethylglycidylether, 2-Ethylhexylglycidylether, Allylglycidylether, Glycidylmethacrylat sowie epoxidfunktionelle Alkyoxysilane wie beispielsweise 3-Glycidyloxypropyltrimethoxysilan, 3-Glycidyioxypropyltriethoxysilan, 3-Glycidyloxypropyltripropoxysilan, 3-Glycidyloxypropyl-methyl-dimethoxysilan, 3-Glycidyloxypropyl-ethyldiethoxysilan, 3-Glycidyloxypropyltrlisopropoxysilan. Vorzugsweise ist das Epoxid der allgemeinen Formel (I) ein terminales Epoxid, wobei R¹, R² und R³ für Wasserstoff stehen, und R⁴ Wasserstoff, ein gegebenenfalls zusätzliche Heteroatome wie Stickstoff, Sauerstoff, Silizium, Schwefel oder Phosphor enthaltender Alkyl- oder Arylrest sein kann und sich in verschiedenen Wiederholungseinheiten unterscheiden kann. Vorzugsweise werden als Alkylenoxide Ethylenoxid und/oder Propylenoxid, insbesondere Propylenoxid eingesetzt.

Vorzugsweise wird das Verfahren derart durchgeführt, dass sich an die Aktivierung des Katalysators und die Konditionierung der polymeren Formaldehyd-Starterverbindung in Schritt (β) ein Polymerisationsschritt (γ) unter Dosierung von einem oder mehreren Alkylenoxiden anschließt. Grundsätzlich kann das Verfahren aber auch nach Schritt (β) beendet werden, so dass die konditionierte polymere Formaldehyd-Starterverbindung dann das Endprodukt des Verfahrens darstellt. Diese weist im Allgemeinen durch die Konditionierung eine hohe Stabilität auf und kann analog zu dem aus Schritt (γ) erhaltenen Polyoxymethylen-Blockcopolymer, wenn gewünscht, als OH-funktioneller Baustein für diverse Folgereaktionen eingesetzt werden.

In einer weiteren Ausführungsform des Verfahrens erfolgt die Polymerisation der Alkylenoxide in Gegenwart eines weiteren Comonomers. Als weitere Comonomere können beispielsweise alle Sauerstoffhaltigen cyclischen Verbindungen, insbesondere zyklische Ether, wie z.B. Oxetan, THF, Dioxan oder zyklische Acetale wie z.B. 1,3-Dioxolan oder 1,3-Dioxepan, zyklische Ester wie z.B. γ-Butyrolacton, γ-Valerolacton, ε-Caprolacton, oder zyklische Säureanhydride wie z.B. Maleinsäureanhydrid, Glutarsäureanhydrid oder Phthalsäureanhydrid sowie Kohlendioxid zum Einsatz kommen. Bevorzugt wird als Comonomer Kohlendioxid eingesetzt.

Die Dosierung weiterer Co-Monomere kann in Reinsubstanz, in Lösung oder als Mischung mit einem oder mehreren Alkylenoxiden erfolgen. Die Dosierung weiterer Co-Monomere kann ebenfalls parallel zu der Dosierung oder im Anschluss an die Dosierung der Alkylenoxide erfolgen.

In einer bevorzugten Ausführungsform des Verfahrens erfolgt neben der Anlagerung des oder der Alkylenoxide an die polymere Formaldehyd-Starterverbindung auch die Anlagerung von Kohlendioxid (CO₂) als weiteres Comonomer. Hierüber lassen sich Polyoxymethylen-Polyoxyalkylencarbonat-Copolymere herstellen. Diese weisen im Vergleich zu existierenden Produkten (zum Beispiel Polyetherpolyole im Polyurethanbereich beziehungsweise Polyoxymethylen-(Co-)Polymere im POM-Sektor) zusätzlich CO₂ als kostengünstiges und umweltfreundliches Comonomer auf. Da CO₂ u.a. ein Abfallprodukt der Energiegewinnung aus fossilen Rohstoffen ist und hier einer erneuten chemischen Verwertung zugeführt wird, ergeben sich durch den Einbau des CO₂ in die Polymerstrukturen neben ökonomischen auch ökologische Vorteile (günstige CO₂-Bilanz der Produktpolymere, etc.).

Polyoxymethylen-Polyoxyalkylencarbonat-Blockcopolymere im Sinne der Erfindung bezeichnen polymere Verbindungen, die mindestens einen Polyoxymethylen-Block sowie mindestens einen Polyoxyalkylencarbonat-Block enthalten. Polyoxymethylen-Polyoxyalkylencarbonat-Block-copolymere sind besonders interessant als Einsatzstoffe im Polyurethanbereich, sowie für Anwendungen im Polyoxymethylen (POM)-Sektor. Durch Veränderung des CO₂-Gehaltes können die physikalischen Eigenschaften auf die jeweilige Anwendung angepasst werden, wodurch neue Anwendungsgebiete für diese Blockcopolymere erschlossen werden können. Insbesondere lassen sich über das Verfahren Polyoxymethylen-Polyoxyalkylencarbonat-Copolymere bereitstellen, wobei ein hoher Gehalt an eingebautem CO₂ erreicht wird, die Produkte eine vergleichsweise niedrige Polydispersität aufweisen und sehr wenige Neben- und Zersetzungsprodukte des polymeren Formaldehyds enthalten.

Im Folgenden werden mehrere Varianten zur Durchführung des Verfahrens zur Herstellung von Polyoxymethylen-Blockcopolymeren durch Anlagerung von Alkylenoxiden und gegebenenfalls weiteren Comonomeren an polymere Formaldehyd-Starterverbindungen detailliert beschrieben. Die Darstellung ist lediglich beispielhaft.

Beispielsweise ist das Verfahren dadurch gekennzeichnet, dass im ersten Schritt (i)
(a) ein Suspensionsmittel oder eine polymere Formaldehyd-Starterverbindung vorgelegt und gegebenenfalls Wasser und/oder andere leicht flüchtige Verbindungen durch erhöhte Temperatur und/oder reduzierten Druck entfernt werden ("Trocknung"), wobei der DMC-Katalysator der polymeren Formaldehyd-Starterverbindung oder dem Suspensionsmittel vor oder nach der Trocknung zugesetzt wird,
(β) zur Aktivierung des DMC-Katalysators in Gegenwart der polymeren Formaldehyd-Starterverbindung eine Teilmenge (bezogen auf die Gesamtmenge der bei der Aktivierung und Polymerisation eingesetzten Menge an Alkylenoxiden) von einem oder mehreren Alkylenoxiden zu der aus Schritt (a) resultierenden Mischung zugesetzt wird, wobei diese Zugabe einer Teilmenge an Alkylenoxid gegebenenfalls in Gegenwart von weiteren Comonomeren, wie insbesondere CO₂, erfolgen kann, und wobei dann die aufgrund der folgenden exothermen chemischen Reaktion auftretende Temperaturspitze ("Hotspot") und/oder ein Druckabfall im Reaktor jeweils abgewartet wird, und wobei der Schritt (β) zur Aktivierung auch mehrfach erfolgen kann,
   und im zweiten Schritt (ii)
(γ) ein oder mehrere Alkylenoxide und gegebenenfalls weitere Comonomere, insbesondere Kohlendioxid, zu der aus Schritt (β) resultierenden Mischung zugesetzt werden, wobei die in Schritt (γ) eingesetzten Alkylenoxide gleich oder verschieden sein können von den bei Schritt (β) eingesetzten Alkylenoxiden ("Polymerisation"),
   wobei wenigstens in einem der Schritte (a) und (β) mindestens eine polymere Formaldehyd-Starterverbindung zugesetzt wird.

Die polymere Formaldehyd-Starterverbindung kann hierbei gemeinsam mit dem DMC-Katalysator und dem Suspensionsmittel in Schritt (a) vorgelegt werden, oder bevorzugt nach der Trocknung, spätestens in Schritt (β), zugegeben werden.

Die gegebenenfalls eingesetzten Suspensionsmittel enthalten im Allgemeinen keine H-funktionellen Gruppen. Als Suspensionsmittel sind alle polar-aprotischen, schwach polar-aprotischen und unpolar-aprotischen Lösungsmittel geeignet, die jeweils keine H-funktionellen Gruppen enthalten. Als Suspensionsmittel kann auch eine Mischung aus zwei oder mehreren dieser Suspensionsmittel eingesetzt werden. Beispielhaft seien an dieser Stelle folgende polar-aprotischen Suspensionsmittel genannt: 4-Methyl-2-oxo-1,3-dioxolan (im Folgenden auch als cyclisches Propylencarbonat oder cPC bezeichnet), 1,3-Dioxolan-2-on (im Folgenden auch als cyclisches Ethylencarbonat oder cEC bezeichnet), Aceton, Methylethylketon, Acetonitril, Nitromethan, Dimethylsulfoxid, Sulfolan, Dimethylformamid, Dimethylacetamid und N-Methylpyrrolidon. Zu der Gruppe der unpolar- und schwach polar-aprotischen Suspensionsmittel zählen z.B. Ether, wie z.B. Dioxan, Diethylether, Methyl-tert-Butylether und Tetrahydrofuran, Ester, wie z.B. Essigsäureethylester und Essigsäurebutylester, Kohlenwasserstoffe, wie z.B. Pentan, n-Hexan, Benzol und alkylierte Benzolderivate (z.B. Toluol, Xylol, Ethylbenzol) und chlorierte Kohlenwasserstoffe, wie z.B., Chloroform, Chlorbenzol, Dichlorbenzol und Tetrachlorkohlenstoff. Bevorzugt als Suspensionsmittel werden 4-Methyl-2-oxo-1,3-dioxolan, 1,3-Dioxolan-2-on, Toluol, Xylol, Ethylbenzol, Chlorbenzol und Dichlorbenzol sowie Mischungen zweier oder mehrerer dieser Suspensionsmittel eingesetzt, besonders bevorzugt ist 4-Methyl-2-oxo-1,3-dioxolan und 1,3-Dioxolan-2-on und Toluol oder eine Mischung aus 4-Methyl-2-oxo-1,3-dioxolan und 1,3-Dioxolan-2-on und/oder Toluol. Es ist ebenfalls auch möglich als Suspensionsmittel eine weitere Starterverbindung, welche unter den Reaktionsbedingungen in flüssiger Form vorliegt, im Gemisch mit der polymeren Formaldehyd-Starterverbindung einzusetzen.

### Zu Schritt (α): (Trocknung)

Die Zugabe der einzelnen Komponenten in Schritt (a) kann gleichzeitig oder nacheinander in beliebiger Reihenfolge erfolgen.

Bevorzugt wird in Schritt (a) ein Suspensionsmittel, das keine H-funktionellen Gruppen enthält, im Reaktor vorgelegt. Anschließend wird die für die Polymerisation benötigte Menge an DMC-Katalysator, der bevorzugt nicht aktiviert ist, in den Reaktor gegeben. Die Reihenfolge der Zugabe ist dabei nicht entscheidend. Es kann auch erst der DMC-Katalysator und anschließend das Suspensionsmittel in den Reaktor gefüllt werden. Alternativ kann auch erst der DMC-Katalysator in dem Suspensionsmittel suspendiert und anschließend die Suspension in den Reaktor gefüllt werden. Durch das Suspensionsmittel wird eine ausreichende Wärmeaustauschfläche mit der Reaktorwand oder im Reaktor eingebauten Kühlelementen zur Verfügung gestellt, so dass die freigesetzte Reaktionswärme sehr gut abgeführt werden kann. Außerdem stellt das Suspensionsmittel bei einem Kühlungsausfall Wärmekapazität zur Verfügung, so dass die Temperatur in diesem Falle unterhalb der Zersetzungstemperatur des Reaktionsgemisches gehalten werden kann. Alternativ können auch in Schritt (a) ein Suspensionsmittel, das keine H-funktionellen Gruppen enthält, und zusätzlich eine Teilmenge der polymeren Formaldehyd-Starterverbindung sowie gegebenenfalls DMC-Katalysator im Reaktor vorgelegt werden, oder es können auch in Schritt (a) eine Teilmenge der polymeren Formaldehyd-Starterverbindung sowie gegebenenfalls DMC-Katalysator im Reaktor vorgelegt werden. Weiterhin können auch in Schritt (a) die Gesamtmenge der polymeren Formaldehyd-Starterverbindung sowie gegebenenfalls DMC-Katalysator im Reaktor vorgelegt werden.

Die polymere Formaldehyd-Starterverbindung kann hierbei grundsätzlich als Gemisch mit weiteren polymeren Formaldehyd-Starterverbindungen oder anderen H-funktionellen Starterverbindungen vorgelegt werden.

Das Verfahren kann derart durchgeführt werden, dass in Schritt (a) ein Suspensionsmittel, die polymere Formaldehyd-Starterverbindung und der DMC-Katalysator vorgelegt werden und gegebenenfalls Wasser und/oder andere leicht flüchtige Verbindungen durch erhöhte Temperatur und/oder reduzierten Druck entfernt werden ("Trocknung") oder in einer alternativen Ausführungsform der Schritt (a) derart durchgeführt wird, dass in einem Schritt (α1) ein Suspensionsmittel und der DMC-Katalysator vorgelegt und gegebenenfalls Wasser und/oder andere leicht flüchtige Verbindungen durch erhöhte Temperatur und/oder reduzierten Druck entfernt werden ("Trocknung") und in einem darauffolgenden Schritt (a2) zu dem Gemisch aus Schritt (α1) die Formaldehyd-Starterverbindung zugegeben wird. Die Zugabe der polymeren Formaldehyd-Starterverbindung kann nach Abkühlung der Reaktionsmischung aus Schritt (α1), insbesondere bei Raumtemperatur, erfolgen, oder es kann die Reaktionsmischung bereits auf die im darauffolgenden Schritt (β) vorherrschende Temperatur gebracht werden und die Zugabe bei dieser Temperatur erfolgen. Die Zugabe der Formaldehyd-Starterverbindung erfolgt im Allgemeinen unter inerten Bedingungen.

Der DMC-Katalysator wird vorzugsweise in einer Menge eingesetzt, so dass der Gehalt an DMC-Katalysator im resultierenden Reaktionsprodukt 10 bis 10000 ppm, besonders bevorzugt 20 bis 5000 ppm und höchst bevorzugt 50 bis 2000 ppm beträgt.

In einer bevorzugten Ausführungsform wird in das resultierende Gemisch aus Suspensionsmittel und DMC-Katalysator und/oder der polymeren Formaldehyd-Starterverbindung bei einer Temperatur von 90 bis 150°C, besonders bevorzugt von 100 bis 140°C Inertgas (beispielsweise Argon oder Stickstoff), ein Inertgas-Kohlendioxid-Gemisch oder Kohlendioxid eingeleitet und gleichzeitig ein reduzierter Druck (absolut) von 10 mbar bis 800 mbar, besonders bevorzugt von 50 mbar bis 200 mbar angelegt.

In einer alternativen bevorzugten Ausführungsform wird das resultierende Gemisch aus DMC-Katalysator mit Suspensionsmittel und/oder der polymeren Formaldehyd-Starterverbindung bei einer Temperatur von 90 bis 150°C, besonders bevorzugt von 100 bis 140°C mindestens einmal, vorzugsweise dreimal mit 1 bar bis 100 bar (absolut), besonders bevorzugt 3 bar bis 50 bar (absolut) eines Inertgases (beispielsweise Argon oder Stickstoff), eines Inertgas-Kohlendioxid-Gemisches oder Kohlendioxid beaufschlagt und jeweils anschließend der Überdruck auf ca. 1 bar bis 20 bar(absolut) reduziert.

Der DMC-Katalysator kann beispielweise in fester Form oder als Suspension in einem oder mehreren Suspensionsmittel(n) oder - falls die polymere Formaldehyd-Starterverbindung in einem flüssigen Aggregatszustand vorliegt - als Suspension in einer polymeren Formaldehyd-Starterverbindung zugegeben werden.

### Zu Schritt (β): (Aktivierung)

Schritt (β) dient der Aktivierung des DMC-Katalysators. Dieser Schritt kann gegebenenfalls unter Inertgasatmosphäre, unter einer Atmosphäre aus Inertgas-Kohlendioxid-Gemisch oder unter einer Kohlendioxid-Atmosphäre durchgeführt werden. Als Aktivierung im Sinne dieser Erfindung wird ein Schritt bezeichnet, bei dem eine Teilmenge Alkylenoxid bei Temperaturen von 20 bis 120°C ("Aktivierungstemperatur") zur DMC-Katalysator-Suspension zugegeben wird und dann die Zugabe des Alkylenoxids unterbrochen wird, wobei aufgrund einer folgenden exothermen chemischen Reaktion eine Wärmeentwicklung, die zu einer Temperaturspitze ("Hotspot") führen kann, sowie aufgrund der Umsetzung von Alkylenoxid und gegebenenfalls CO₂ ein Druckabfall im Reaktor beobachtet wird.

In einer bevorzugten Ausführungsform beträgt die bei der Aktivierung in Schritt (β) eingesetzte Menge von einem oder mehreren Alkylenoxiden 2 bis 100 Stoffmengenäquivalente, bevorzugt 4 bis 50 Stoffmengenäquivalente, besonders bevorzugt 4,5 bis 25 Stoffmengenäquivalente bezogen auf die eingesetzte Stoffmenge an polymerer Formaldehyd-Starterverbindung, wobei das zahlenmittlere Molekulargewicht (Mₙ) der Formaldehyd-Starterverbindung bzw. der eingesetzten Gemische zugrunde gelegt wird. Das Alkylenoxid kann in einem Schritt oder schrittweise in mehreren Teilmengen zugegeben werden. Bevorzugt wird nach Zugabe einer Teilmenge an Alkylenoxid die Zugabe des Alkylenoxids bis zum Auftreten der Wärmeentwicklung unterbrochen und erst dann die nächste Teilmenge an Alkylenoxid zugegeben.

Für das Verfahren hat sich weiterhin gezeigt, dass die Aktivierung (Schritt (β)) in Gegenwart der polymeren Formaldehyd-Starterverbindung zur Herstellung der Polyoxymethylen-Blockcopolymere vorteilhafterweise bei einer Aktivierungstemperatur T_{act} von 20 bis 120 °C, bevorzugt bei 30 bis 120 °C, besonders bevorzugt bei 40 bis 100 °C und ganz besonders bevorzugt bei 60 bis 100 °C durchgeführt wird. Die Wärmeentwicklung durch die chemische Reaktion bei der Aktivierung des DMC-Katalysators führt vorzugsweise nicht zu einem Überschreiten einer Temperatur von 120 °C im Reaktionsgefäß. Unterhalb von 20 °C läuft die Reaktion nur sehr langsam ab und eine Aktivierung des DMC-Katalysators dauert unverhältnismäßig lange oder findet ggf. nicht im gewünschten Umfang statt. Bei Temperaturen von 130 °C und höher steigt die Menge an unerwünschten Neben-/ Zersetzungsprodukten polymerer Formaldehyd-Starterverbindungen stark an. Es wird z.B. die Bildung von Formiat und Methoxy-Spuren beobachtet. Es hat sich weiterhin als Vorteil dieser Ausführungsform gezeigt, dass sich über eine genaue Abstimmung der Parameter in diesem Bereich ebenfalls die Eigenschaften des erhaltenen Polyoxymethylen-Blockcopolymers, insbesondere die Länge des Polyoxymethylen-Blocks, beeinflussen lassen.

Der Verfahrensschritt der Aktivierung ist die Zeitspanne von der Zugabe der Teilmenge an Alkylenoxid, gegebenenfalls in Gegenwart von CO₂, zum Reaktionsgemisch umfassend ein Suspensionsmittel, DMC-Katalysator und die Formaldehyd-Starterverbindung, bis zum Auftreten der Wärmeentwicklung (Exothermie). Gegebenenfalls kann die Teilmenge des Alkylenoxids in mehreren Einzelschritten, gegebenenfalls in Gegenwart von CO₂, zum Reaktionsgemisch gegeben werden und dann jeweils die Zugabe des Alkylenoxids unterbrochen werden. Im diesem Fall umfasst der Verfahrensschritt der Aktivierung die Zeitspanne von der Zugabe der ersten Teilmenge an Alkylenoxid, gegebenenfalls in Gegenwart von CO₂, zum Reaktionsgemisch bis zum Auftreten der Wärmeentwicklung nach Zugabe der letzten Teilmenge an Alkylenoxid. Im Allgemeinen kann dem Aktivierungsschritt ein Schritt zum Trocknen des DMC-Katalysators und ggf. der polymeren Formaldehyd-Starterverbindung bei erhöhter Temperatur und/oder reduziertem Druck, gegebenenfalls unter Durchleiten eines Inertgases durch die Reaktionsmischung, vorgelagert sein, wobei dieser Schritt der Trocknung nicht Teil des Aktivierungsschrittes im Sinne der vorliegenden Erfindung ist.

Die Dosierung eines oder mehrerer Alkylenoxide (und gegebenenfalls der weiteren Comonomere, insbesondere Kohlendioxid) kann prinzipiell in unterschiedlicher Weise erfolgen. Der Start der Dosierung kann aus dem Unterdruck heraus oder bei einem zuvor gewählten Vordruck erfolgen. Der Vordruck wird bevorzugt durch Einleiten eines Inertgases (wie beispielsweise Stickstoff oder Argon) oder von Kohlendioxid eingestellt, wobei der Druck (absolut) 5 mbar bis 100 bar, vorzugsweise 10 mbar bis 50 bar und bevorzugt 20 mbar bis 50 bar beträgt.

Eine alternative Ausführungsform ist auch eine zweistufige Aktivierung (Schritt β), wobei
(β-I) in einer ersten Aktivierungsstufe die Zugabe einer ersten Teilmenge von Alkylenoxid unter Inertgasatmosphäre erfolgt und
(β-II) in einer zweiten Aktivierungsstufe die Zugabe einer zweiten Teilmenge von Alkylenoxid unter Kohlendioxid-Atmosphäre erfolgt,
wobei die polymere Formaldehyd-Starterverbindung vor und nach Teilschritt (I) zugegeben werden kann.

### Zu Schritt (γ): (Polymerisation)

Die Dosierung eines oder mehrerer Alkylenoxide kann simultan oder sequentiell über jeweils separate Dosierungen (Zugaben) oder über eine oder mehrere Dosierungen erfolgen. Werden mehrere Alkylenoxide zur Synthese der Polyoxymethylen-Blockcopolymere eingesetzt, so können die Alkylenoxide einzeln oder als Gemisch dosiert werden.

Für das Verfahren hat sich gezeigt, dass die Polymerisation zur Herstellung des Polyetherblockes in den Polyoxymethylen-Polyoxyalkylen-Blockcopolymeren (Schritt ( )) vorteilhafterweise bei 50 bis 150 °C, bevorzugt bei 60 bis 145 °C, besonders bevorzugt bei 70 bis 140 °C und ganz besonders bevorzugt bei 90 bis 130 °C durchgeführt wird. Werden Temperaturen unterhalb von 50 °C eingestellt, läuft die Reaktion unverhältnismäßig langsam ab. Bei Temperaturen oberhalb von 150 °C steigt die Menge an unerwünschten Nebenprodukten stark an.

In einer weiteren Ausführungsform des Verfahrens erfolgt die Polymerisation in Gegenwart wenigstens eines Comonomers. Die Dosierung der weiteren Comonomere kann in Reinsubstanz, in Lösung oder sonst in jeglichen technisch-realisierbaren Formen erfolgen. Die Dosierung eines oder mehrerer Alkylenoxide und der Co-Monomere kann simultan oder sequentiell erfolgen, wobei die gesamte Menge an Co-Monomer auf einmal oder dosiert über die Reaktionszeit zugegeben werden kann. In einer bevorzugten Ausführungsform wird Kohlendioxid als Comonomer eindosiert. Die Dosierung eines oder mehrerer Alkylenoxide erfolgt simultan oder sequentiell zur Kohlendioxid-Dosierung. Über die Art der Dosierung der Alkylenoxide und der Comonomere, vorzugsweise Kohlendioxid, ist es möglich, Polyoxymethylen-Blockcopolymere mit statistischen, alternierenden, blockartigen oder gradientenartigen Polyether- und/oder Polyoxyalkylencarbonat -Blöcken zu synthetisieren.

Bei der Herstellung der Polyoxymethylen-Polyoxyalkylencarbonat-Blockcopolymere unter Copolymerisation von CO₂ als Comonomer wird vorzugsweise ein Überschuss an Kohlendioxid bezogen auf die zu erwartende bzw. abgeschätzte Menge an eingebautem Kohlendioxid im Polyoxyalkylencarbonatblock eingesetzt, da bedingt durch die Reaktionsträgheit von Kohlendioxid ein Überschuss von Kohlendioxid von Vorteil ist. Die Menge an Kohlendioxid kann über den Gesamtdruck bei den jeweiligen Reaktionsbedingungen festgelegt werden. Als Gesamtdruck (absolut) hat sich der Bereich von 0,01 bis 120 bar, bevorzugt 0,1 bis 110 bar, besonders bevorzugt von 1 bis 100 bar für die Copolymerisation zur Herstellung des Polyoxyalkylencarbonatblockes als vorteilhaft erwiesen. Für das Verfahren hat sich weiterhin gezeigt, dass die Copolymerisation zur Herstellung des Polyoxyalkylencarbonatblockes vorteilhafterweise bei 50 bis 150 °C, bevorzugt bei 60 bis 145 °C, besonders bevorzugt bei 70 bis 140 °C und ganz besonders bevorzugt bei 90 bis 130 °C durchgeführt wird. Werden Temperaturen unterhalb von 50 °C eingestellt, läuft die Reaktion unverhältnismäßig langsam ab. Bei Temperaturen oberhalb von 150 °C steigt die Menge an unerwünschten Nebenprodukten stark an. Weiterhin ist zu beachten, dass das CO₂ bei der Wahl von Druck und Temperatur vom gasförmigen Zustand möglichst in den flüssigen und/oder überkritischen flüssigen Zustand übergeht. CO₂ kann jedoch auch als Feststoff in den Reaktor gegeben werden und dann unter den gewählten Reaktionsbedingungen in den flüssigen und/oder überkritischen flüssigen Zustand übergehen.

Kohlendioxid kann in gasförmigem, festem, flüssigem oder überkritischem Zustand, bevorzugt im gasförmigen oder festen, besonders bevorzugt im gasförmigen Zustand eingesetzt werden. Bei Einsatz von Kohlendioxid im gasförmigen Zustand wird ein Kohlendioxid-Partialdruck von 1 bis 73,8 bar, bevorzugt von 1 bis 60 bar, besonders bevorzugt von 5 bis 50 bar gewählt. Die Kombination aus Druck und Temperatur wird bei Verwendung von gasförmigem Kohlendioxid derart gewählt, dass Kohlendioxid sich als Reinsubstanz unter den gewählten Reaktionsbedingungen im gasförmigen Zustand befindet. Die entsprechenden Bedingungen können anhand des Phasendiagrammes abgeleitet werden. Nach Einbringen von gasförmigem Kohlendioxid in den Reaktor löst sich dieses teilweise oder ganz in der Reaktionsmischung.

Die drei Schritte (a), (β) und (γ) können in demselben Reaktor oder jeweils separat in unterschiedlichen Reaktoren durchgeführt werden. Besonders bevorzugte Reaktortypen für das Verfahren sind Rührkessel, Rohrreaktor, und Schlaufenreaktor. Weiterhin können auch Extruder, Kneter, etc. als bevorzugte Reaktoren für das Verfahren eingesetzt werden. Werden die Reaktionsschritte α, β und γ in unterschiedlichen Reaktoren durchgeführt, kann für jeden Schritt ein unterschiedlicher Reaktortyp verwenden werden. Bei einer vollständig kontinuierlichen Reaktionsführung sind bevorzugt die einzelnen Schritte bzw. die Schritte (a) und (β) von (γ) räumlich voneinander zu trennen, so dass eine getrennte Temperaturführung sowie eine geeignete Gaszufuhr und Anlegen von Unterdruck, Zugabe von polymerem Formaldehyd und Dosierung von Monomeren in den Einzelschritten möglich ist.

Aufgrund ihrer thermischen und chemischen Stabilität lassen sich die Polyoxymethylen-Blockcopolymere, bzw. die aus dem Verfahren erhaltenen Produktgemische insbesondere destillativ aufarbeiten. Dabei kommen bevorzugt Dünnschichtverdampfer, Strangverdampfer und Stripp-Kolonnen sowie Kombinationen dieser zum Entfernen von Lösungs- bzw. Suspensionsmitteln, flüchtigen Bestandteilen und unreagierten Monomeren und/oder Oligomeren zum Einsatz. Jedoch sind hier auch prinzipiell alle anderen Apparaturen zur thermischen destillativen Aufarbeitung geeignet. Diese Art der Aufarbeitung kann kontinuierlich oder diskontinuierlich sowie parallel oder im Anschluss an die Reaktion erfolgen.

Das Molekulargewicht der Polyoxymethylen-Blockcopolymere ergibt sich insbesondere additiv aus dem Molekulargewicht der polymeren Formaldehyd-Starterverbindung und den aufpolymerisierten Blöcken. In einer Ausführungsform weisen die Polyoxymethylen-Blockcopolymere ein zahlenmittleres Molekulargewicht von ≤ 15000 g/mol, bevorzugt ≤ 9500 g/mol, besonders bevorzugt ≤ 6000 g/mol, ganz besonders bevorzugt ≤ 5000 g/mol, insbesondere von 200 g/mol bis 9500 g/mol, bevorzugt von 500 g/mol bis 5000 g/mol auf. Das zahlenmittlere Molekulargewicht lässt sich beispielsweise per Gel-Permeations-Chromatographie (GPC) gegen z.B. PolystyrolStandards und/oder über experimentell ermittelte Hydroxylzahlen (OH#) bestimmen.

Die über das Verfahren erhältlichen Polyoxymethylen-Blockcopolymere besitzen eine Blockstruktur umfassend einen inneren Polyoxymethylen-Block (B), umfassend wenigstens zwei und höchstens 1000 Oxymethyleneinheiten, bevorzugt wenigstens 2 und höchstens 400 Oxymethyleneinheiten, besonders bevorzugt von 8 bis 200, und ganz besonders bevorzugt wenigstens 8 und höchstens 100 Oxymethyleneinheiten, sowie wenigstens einen äußeren oligomeren Block (A), welcher bevorzugt einen Anteil von wenigstens 25 mol%, besonders bevorzugt wenigstens 50 mol-% Polyoxyalkyleneinheiten, bezogen auf die Gesamtmenge aller Oligomereneinheiten in diesem Block, umfasst. Die Anzahl an äußeren oligomeren Blöcken (A) resultiert entsprechend aus der Funktionalität der eingesetzten Formaldehyd-Starterverbindung. Vorzugsweise besteht das Polyoxymethylen-Polyoxyalkylen-Blockcopolymer ausschließlich aus den Blöcken A und B. In einer vorteilhaften Ausführungsform ist der äußere oligomere Block ein Polyoxyalkylenblock, besonders bevorzugt ein Polyoxyalkylencarbonatblock.

Die Polyoxymethylen-Blockcopolymere besitzen vorzugsweise terminale Hydroxy-Gruppen und haben vorzugsweise eine Funktionalität F ≥ 2 (Anzahl an Hydroxy-Gruppen pro Molekül).

In einer weiteren Ausführungsform der Polyoxymethylen-Block-Copolymere haben diese eine monomodale Molekulargewichtsverteilung und einen Polydispersitätsindex (PDI) von ≤ 2,5, bevorzugt ≤ 2,2.

Die nach dem Verfahren erhältlichen Polyoxymethylen-Block-Copolymere enthalten vorzugsweise weniger als 2 Gew.-%, insbesondere weniger als 1 Gew.-% bezogen auf die Gesamtmasse des erhaltenen Polyoxymethylen-Block-Copolymers, Formiat und/oder Methoxy-Verunreinigungen.

Ein Polyoxymethylen-Polyoxyalkylencarbonat-Block-Copolymer umfassend einen inneren Polyoxymethylen-Block ("Starter") sowie wenigstens einen äußeren Polyoxyalkylencarbonatblock gemäß Formel (II) 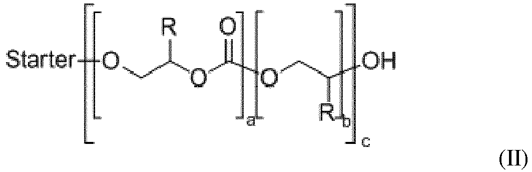
wobei R für einen organischen Rest wie Alkyl, Alkylaryl, Arylalkyl oder Aryl steht, der jeweils auch Heteroatome wie beispielsweise O, S, Si usw. enthalten kann,
und wobei a, b, und c für eine ganzzahlige Zahl stehen und R sich in verschiedenen Wiederholungseinheiten unterscheiden kann,
und wobei die Struktureinheit "Starter" einen aus der polymeren Formaldehyd-Starterverbindung hervorgehenden Polyoxymethylen-Block darstellt,
und wobei das hier im Schema (II) gezeigte Produkt für das Polyoxymethylen-Polyoxyalkylencarbonat-Block-Copolymer lediglich so verstanden werden soll, dass sich Blöcke mit der gezeigten Struktur im erhaltenen Polyoxymethylen-Polyoxyalkylencarbonat-Block-Copolymer prinzipiell wiederfinden können, die Reihenfolge, Anzahl und Länge der Blöcke sowie die OH-Funktionalität des "Starters" aber variieren kann und nicht auf das in Schema (II) gezeigte Polyoxymethylen-Polyoxyalkylencarbonat-Block-Copolymer beschränkt ist, ist ebenfalls geeignet.

Die nach dem Verfahren erhältlichen Polyoxymethylen-Blockcopolymere weisen im Allgemeinen einen geringen Gehalt an Neben- und Zersetzungsprodukten, wie Formiat, Methoxy-Spuren, monomeres und oligomeres Formaldehyd, Restmonomere auf und können problemlos verarbeitet werden.

Die Komponente A2 und/oder A12 ist eine Verbindung mit 2 bis 6 vorzugsweise von 2 bis 4 und besonders bevorzugt von 2 bis 3, Zerewitinoff-aktiven H-Atomen ausgewählt aus der Gruppe der Polyetherpolyole, Polyesterpolyole, Polyetheresterpolyole, Polycarbonatpolyole und/oder Polyacrylatpolyole. An N, O oder S gebundener Wasserstoff wird als Zerewitinoff-aktiver Wasserstoff (oder als "aktiver Wasserstoff") bezeichnet, wenn er nach einem von Zerewitinoff aufgefundenen Verfahren durch Umsetzung mit Methylmagnesiumiodid Methan liefert.

Bevorzugt weisen diese ein zahlenmittleres Molekulargewicht Mₙ von ≥ 62 g/mol bis ≤ 8000 g/mol, bevorzugt von ≥ 90 g/mol bis ≤ 5000 g/mol und besonders bevorzugt von ≥ 92 g/mol bis ≤ 2000 g/mol auf. Das zahlenmittlere Molekulargewicht kann in der vorliegenden Erfindung mittels Gelpermeationschromatographie unter der Verwendung von Polystyrolstandards bestimmt werden.

Bevorzugt sind als Komponente A2 bzw. A12 Block-Copolymere aus einer Startermolekül mit einem Gewichtsanteil < 10 Gew.-%, je einem Propylenoxidblock pro reaktiver Gruppe des Startermoleküls und anschließend einem Ethylenoxid-Endblock, wobei im Mittel über alle Komponenten A2 und A12 der molare Anteil an Propylenoxid größer ist als der des Ethylenoxids.

Verwendbare Polyetherpolyole sind auch beispielsweise Polytetramethylenglykolpolyether, wie sie durch Polymerisation von Tetrahydrofuran mittels kationischer Ringöffnung erhältlich sind.

Geeignete Startermoleküle für die Polyetherpolyole sind zum Beispiel Wasser, Ethylenglykol, Diethylenglykol, Butyldiglykol, Glycerin, Diethylenglykol, Trimethylolpropan, Propylenglykol, Pentaerythrit, Sorbit, Saccharose, Ethylendiamin, Toluoldiamin, Triethanolamin, 1,4-Butandiol, 1,6-Hexandiol sowie niedermolekulare, Hydroxylgruppen aufweisende Ester derartiger Polyole mit Dicarbonsäuren.

Geeignete Polyesterpolyole sind unter Anderem Polykondensate aus Di- sowie weiterhin Tri-, und Tetraolen und Di- sowie weiterhin Tri- und Tetracarbonsäuren oder Hydroxycarbonsäuren oder Lactonen. Anstelle der freien Polycarbonsäuren können auch die entsprechenden Polycarbonsäureanhydride oder entsprechende Polycarbonsäureester von niederen Alkoholen zur Herstellung der Polyester verwendet werden.

Beispiele für geeignete Diole sind Ethylenglykol, Butylenglykol, Diethylenglykol, Triethylenglykol, Polyalkylenglykole wie Polyethylenglykol, weiterhin 1,2-Propandiol, 1,3-Propandiol, 1,3-Butandiol, 1,4-Butandiol, 1,6-Hexandiol und Isomere, Neopentylglykol oder Hydroxypivalinsäureneopentylglykolester. Daneben können auch Polyole wie Trimethylolpropan, Glycerin, Erythrit, Pentaerythrit, Trimethylolbenzol oder Trishydroxyethylisocyanurat eingesetzt werden.

Als Polycarbonsäuren können beispielsweise Phthalsäure, Isophthalsäure, Terephthalsäure, Tetrahydrophthalsäure, Hexahydrophthalsäure, Cyclohexandicarbonsäure, Adipinsäure, Azelainsäure, Sebacinsäure, Glutarsäure, Tetrachlorphthalsäure, Maleinsäure, Fumarsäure, Itaconsäure, Malonsäure, Korksäure, Bernsteinsäure, 2-Methylbernsteinsäure, 3,3-Diethylglutarsäure, 2,2-Dimethylbernsteinsäure, Dodekandisäure, Endomethylentetrahydrophthalsäure, Dimerfettsäure, Trimerfettsäure, Zitronensäure, oder Trimellithsäure eingesetzt werden. Als Säurequelle können auch die entsprechenden Anhydride verwendet werden.

Sofern die mittlere Funktionalität des zu veresternden Polyols > 2 ist, können zusätzlich auch Monocarbonsäuren wie beispielsweise Benzoesäure und Hexancarbonsäure mit verwendet werden.

Hydroxycarbonsäuren, die als Reaktionsteilnehmer bei der Herstellung eines Polyesterpolyols mit endständigen Hydroxylgruppen mitverwendet werden können, sind beispielsweise Hydroxycapronsäure, Hydroxybuttersäure, Hydroxydecansäure, Hydroxystearinsäure und dergleichen. Geeignete Lactone sind unter anderem Caprolacton, Butyrolacton und Homologe.

Verwendbare Polycarbonatpolyole sind Hydroxylgruppen aufweisende Polycarbonate, zum Beispiel Polycarbonatdiole. Diese sind durch Reaktion von Kohlensäurederivaten, wie Diphenylcarbonat, Dimethylcarbonat oder Phosgen, mit Polyolen, bevorzugt Diolen erhältlich.

Beispiele derartiger Diole sind Ethylenglykol, 1,2- und 1,3-Propandiol, 1,3- und 1 ,4-Butandiol, 1,6-Hexandiol, 1,8-Octandiol, Neopentylglykol, 1,4-Bishydroxymethylcyclohexan, 2-Methyl-1,3-propandiol, 2,2,4-Trimethylpentandiol-1,3, Dipropylenglykol, Polypropylenglykole, Dibutylenglykol, Polybutylenglykole, Bisphenol A und lactonmodifizierte Diole der vorstehend genannten Art.

Verwendbare Polyetheresterpolyole sind solche Verbindungen, die Ethergruppen, Estergruppen und OH-Gruppen enthalten. Organische Dicarbonsäuren mit bis zu 12 Kohlenstoffatomen sind zur Herstellung der Polyetheresterpolyole geeignet, vorzugsweise aliphatische Dicarbonsäuren mit ≥ 4 bis ≤ 6 Kohlenstoffatomen oder aromatische Dicarbonsäuren, die einzeln oder im Gemisch verwendet werden. Beispielhaft seien Korksäure, Azelainsäure, Decandicarbonsäure, Maleinsäure, Malonsäure, Phthalsäure, Pimelinsäure und Sebacinsäure sowie insbesondere Glutarsäure, Fumarsäure, Bernsteinsäure, Adipinsäure, Phthalsäure, Terephthalsäure und Isoterephthalsäure genannt. Als Derivate dieser Säuren können beispielsweise deren Anhydride sowie deren Ester und Halbester mit niedermolekularen, monofunktionellen Alkoholen mit ≥ 1 bis ≤ 4 Kohlenstoffatomen eingesetzt werden.

Als weitere Komponente zur Herstellung der Polyetheresterpolyole werden Polyetherpolyole eingesetzt, die man durch Alkoxylieren von Startermolekülen wie beispielsweise mehrwertigen Alkoholen erhält. Die Startermoleküle sind mindestens difunktionell, können aber gegebenenfalls auch Anteile höherfunktioneller insbesondere trifunktioneller Startermoleküle enthalten.

Startermoleküle für diese Polyetherpolyole sind zum Beispiel Diole mit zahlenmittleren Molekulargewichten Mₙ von vorzugsweise ≥ 18 g/mol bis ≤ 400 g/mol oder von ≥ 62 g/mol bis ≤ 200 g/mol wie 1,2-Ethandiol, 1,3-Propandiol, 1,2-Propandiol, 1,4-Butandiol, 1,5-Pentendiol, 1,5-Pentandiol, Neopentylglykol, 1,6-Hexandiol, 1,7-Heptandiol, 1,8-Octandiol, 1,10-Decandiol, 2-Methyl-1,3-propandiol, 2,2-Dimethyl-1,3-propandiol, 3-Methyl-1,5-pentandiol, 2-Butyl-2-ethyl-1,3-propandiol, 2-Buten-1,4-diol und 2-Butin-1,4-diol, Etherdiole wie Diethylenglykol, Triethylenglykol, Tetraethylenglykol, Dibutylenglykol, Tributylenglykol, Tetrabutylenglykol, Dihexylenglykol, Trihexylenglykol, Tetrahexylenglykol und Oligomerengemische von Alkylenglykolen, wie Diethylenglykol.

Neben den Diolen können auch Polyole mit zahlenmittleren Funktionalitäten von > 2 bis ≤ 8, oder von ≥ 3 bis ≤ 4 mitverwendet werden, zum Beispiel 1,1,1-Trimethylolpropan, Triethanolamin, Glycerin, Sorbitan und Pentaerythrit sowie auf Triolen oder Tetraolen gestartete Polyethylenoxidpolyole mit mittleren Molekulargewichten von vorzugsweise ≥ 62 g/mol bis ≤ 400 g/mol oder von ≥ 92 g/mol bis ≤ 200 g/mol.

Polyetheresterpolyole können auch durch die Alkoxylierung von Reaktionsprodukten, die durch die Umsetzung von organischen Dicarbonsäuren und Diolen erhalten werden, hergestellt werden. Als Derivate dieser Säuren können beispielsweise deren Anhydride eingesetzt werden, wie zum Beispiel Phthalsäureanhydrid.

Polyacrylatpolyole können durch radikalische Polymerisation von Hydroxylgruppen aufweisenden, olefinisch ungesättigten Monomeren oder durch radikalische Copolymersation von Hydroxylgruppen aufweisenden, olefinisch ungesättigten Monomeren mit gegebenenfalls anderen olefinisch ungesättigten Monomeren erhalten werden. Beispiele hierfür sind Ethylacrylat, Butylacrylat, 2-Ethylhexylacrylat, Isobornylacrylat, Methylmethacrylat, Ethylmethacrylat, Butylmethacrylat, Cyclohexylmethacrylat, Isobornylmethacrylat, Styrol, Acrylsäure, Acrylnitril und/oder Methacrylnitril. Geeignete Hydroxylgruppen aufweisende, olefinisch ungesättigte Monomere sind insbesondere 2-Hydroxyethyl-acrylat, 2-Hydroxyethyl-methacrylat, das durch Anlagerung von Propylenoxid an Acrylsäure erhältliche Hydroxypropyl-acrylat-Isomerengemisch sowie das durch Anlagerung von Propylenoxid an Methacrylsäure erhältliche Hydroxypropylmethacrylat-Isomerengemisch. Endständige Hydroxylgruppen können auch in geschützter Form vorliegen. Geeignete Radikalinitiatoren sind die aus der Gruppe der Azoverbindungen, wie zum Beispiel Azoisobutyronitril (AIBN), oder aus der Gruppe der Peroxide, wie beispielsweise Di-tert.-Butylperoxid.

In einer bevorzugten Ausführungsform für das Prepolymer B2 ist A2 eine wie für A12 definierte Verbindung.

Die vorliegende Erfindung wird durch die nachfolgenden Beispiele näher beschrieben, ohne jedoch darauf beschränkt zu sein.

### Beispiele

**Einsatzstoffe**

| | |
|---|---|
| A1 | Polyoxymethylen-Polypropylenoxid-Blockcopolymers (OH-Zahl 59 mg KOH/g, 22 Gew.-% POM), hergestellt durch Anlagerung von Propylenoxid an Polyoxymethylen unter DMC-Katalyse |
| A2 | Polyoxymethylen-Polypropylenoxid-Blockcopolymer (OH-Zahl 41 mg KOH/g, 17 Gew.-% POM), hergestellt durch Anlagerung von Propylenoxid an Polyoxymethylen unter DMC-Katalyse. |
| A3 | Mischung eines Sorbitol-gestartetes Polypropylenoxid-Polyethylenoxid-Blockcopolymers (OH-Zahl 29 mg KOH/g, Propylenoxid:Ethylenoxid =3:1 mol/mol, Ethylenoxid als Endblöcke) und A1 im Gewichtsverhältnis 71:29. Die mittlere OH-Zahl beträgt 37 mg KOH/g. |
| A4 | Mischung eines Sorbitol-gestartetes Polypropylenoxid-Polyethylenoxid-Blockcopolymers (OH-Zahl 29 mg KOH/g, Propylenoxid:Ethylenoxid = 3:1 mol/mol, Ethylenoxid als Endblöcke) und A2 im Gewichtsverhältnis 62:38. Die mittlere OH-Zahl beträgt 36 mg KOH/g |
| A5 | Propylenglycol-gestartetes Polypropylenglykol mit einer OH-Zahl von 56 mg KOH/g (enthält weder Polyoxymethylen-Einheiten noch Ethylenoxid-Einheiten) |
| A7 | Sorbitol-gestartetes Polypropylenoxid-Polyethylenoxid-Copolymer (OH-Zahl 96 mg KOH/g, Propylenoxid:Ethylenoxid =1:5,9 mol/mol), eingesetzt als Zellöffner |
| A8 | Glyzerin-gestartetes Polypropylenoxid-Polyethylenoxid-Copolymer (OH-Zahl 35 mg KOH/g, Propylenoxid:Ethylenoxid =5:1 mol/mol). |
| B1 | Polymeres Isocyanat (Viskosität 0,2 Pa*s bei 25°C, NCO-Gehalt von 7,5 mol/kg) |
| B2 | Uretdion-modifiziertes 4,4'-Methylendiisocyanat (Viskosität von 0,055 Pa*s bei 25°C, NCO-Gehalt von 7,0 mol/kg), hergestellt aus 4,4'-Methylendiisocyanat mit 1-Methylphospholen-1-oxid als Katalysator. |
| B3 | Stammlösung von Chlorwassersoff in einer Mischung aus 4,4'-Methylendiisocyanat und 2,4'-Methylendiisocyanat im Verhältnis 9:11. |

### Herstellung der Prepolymere:

Die Komponenten B1, B2 und B3 werden bei Raumtemperatur vermischt und auf 80°C aufgeheizt. Die Komponenten A1 oder A2 werden bei dieser Temperatur über 30 Minuten zugetropft. Die Mischung wird für zwei Stunden bei 80°C gehalten. Nach Abkühlen auf 20°C wird die Reaktionsmischung in Aluminiumflaschen abgefüllt. Pp1 = Prepolymer gemäß der vorliegenden Erfindung. VPp2= Vergleichsprepolymer

| | Pp1 | VPp2 | |
|---|---|---|---|
| | | Vergleich | |
| B1 | 37,5 | 37,5 | Gew.-Teile |
| B2 | 50,0 | 50,0 | Gew.-Teile |
| B3 | 0,1 | 0,1 | Gew.-Teile |
| A1 | | 12,4 | Gew.-Teile |
| A2 | 12,4 | | Gew.-Teile |
| Summe | 100 | 100 | Gew.-Teile |
| POM-Gehalt berechnet | 21,5 | 27,8 | g/kg |
| NCO-Gehalt nach DIN 53185 (1997) | 6,18 | 6,12 | mol/kg |
| Viskosität bei 25°C nach DIN 53019-1 (9/2008), | 0,20 | 0,22 | Pa*s |

Das Prepolymer auf Basis des Polyol A2 weist eine um 9% günstigere Viskosität auf.

### Herstellung der Schaumstoffe:

Als Kennzahl wird das Hundertfache des Verhältnisses von Isocyanat-Gruppen zu Isocyanat-reaktiven Gruppen bezeichnet. In den folgenden Versuchen werden immer Schaumstoffe miteinander verglichen, die unter Verwendung der gleichen Kennzahl hergestellt wurden. Es wurden in zwei Versuchsreihen Kennzahlen von 70 und 90 eingestellt, wie sie heute auch analog im Markt für Formsitze eingesetzt werden.

Zur Herstellung der Schaumstoffe wird die notwendige Menge Polyol in einem Pappbecher mit Blechboden (Volumen: ca. 850ml) vorgelegt und mit einem Rührwerk (Fa. Pendraulik) mit Standardrührscheibe (d = 64 mm) bei 4200 U/min 45 Sekunden lang mit Luft beladen. Für die Homogenisierung wird die Pendraulik-Standardrührscheibe (Durchmesser 64 mm) benutzt.

Das Isocyanat / Isocyanatgemisch / Prepolymer wird in einen geeigneten Becher eingewogen und wieder entleert (Auslaufzeit: 3 s). Dieser, an den Innenwandungen noch benetzte Becher wird tariert und wieder mit der angegebenen Isocyanatmenge gefüllt. Das Isocyanat wird der Polyolformulierung zugesetzt (Auslaufzeit: 3s). Die Mischung wird mit einem Rührwerk (Fa. Pendraulik) für 5 Sekunden intensiv vermischt. Zu Beginn der Vermischung wird eine Stoppuhr gestartet, von welcher die charakteristischen Reaktionszeiten abgelesen werden. Ca. 93 Gramm des Reaktionsgemisches werden in eine 23°C warme, mit Teflonfolie ausgekleidete, Kastenform aus Aluminium mit 1,6 dm³ Volumen gegossen. Die Form wird verschlossen und verriegelt. Nach sechs Minuten wird die Verriegelung geöffnet, entspannt und der Formendruck wird über die Aufdrückhöhe des Formendeckels durch das Formteil [mm] qualitativ beurteilt. Das entformte Schaumkissen wird bezüglich Ausreaktion sowie Haut- und Porenstruktur qualitativ beurteilt. Die Reaktionskinetik wird an dem Rest des Reaktionsgemisches im Becher bestimmt.
- Die Startzeit ist erreicht, wenn ein erstes Schäumen des Gemisches zu beobachten ist. Dies signalisiert den Beginn der Reaktion zwischen Isocyanat und Wasser.
- Die Abbindezeit ist erreicht, wenn man mit einem Holzsiedestäbchen durch Auftupfen auf die Oberfläche des aufsteigenden Schaumes Fäden ziehen kann. Alternativ bilden sich Klümpchen am Holzsiedestäbchen.
- Die Steigzeit ist erreicht, wenn der Schaum endgültig aufhört zu expandieren. Hierbei ist darauf zu achten, dass einige Systeme dazu neigen, ein Stück abzusacken und dann noch einmal weiter steigen.

### Polyolformulierungen

Die Additiv-Basismischung besteht zu 12,0 Gew.-% aus Glyzerin, 20,5 Gew.-% aus dem Polyether-modifizierten Siloxan Tegostab® B8734 LF2 (OH-Zahl 83 mg KOH/g), 61,6% aus Wasser und 6,0 Gew.-% aus dem Blaskatalysator N-[2-[2-dimethylamino)ethoxy]ethyl]-N-methyl-1,3-propandiamin.

Tegostab® ist ein Markenname der Firma Evonik.

| Herstellungs-Bsp. | HBsp1 | HBsp2 | HBsp3 | HBsp4 | HBsp5 | HBsp6 | Hbsp7 | Hbsp8 | Hbsp9 |
|---|---|---|---|---|---|---|---|---|---|
| | Vergl. | Vergl. | | | Vergl. | Vergl. | | | |
| A3 | 90,37 | 90,25 | | | 90,19 | 90,20 | | | |
| A4 | | | 90,23 | 89,43 | | | 89,98 | | |
| A8 | | | | | | | | 90,24 | 90,24 |
| Additiv-Basismischung | 5,02 | 5,02 | 5,02 | 5,02 | 5,02 | 5,02 | 5,02 | 5,02 | 5,02 |
| | | | | | | | | | |
| A7 | 4,00 | 3,99 | 3,99 | 4,90 | 3,99 | 3,99 | 4,30 | 3,99 | 3,99 |
| Diethanolamin | 0,30 | 0,35 | 0,35 | 0,30 | 0,30 | 0,35 | 0,30 | 0,30 | 0,30 |
| Gelkatalysator | 0,30 | 0,40 | 0,40 | 0,35 | 0,50 | 0,45 | 0,40 | 0,45 | 0,45 |
| | 100,00 | 100,00 | 100,00 | 100,00 | 100,00 | 100,00 | 100,00 | 100,00 | 100,00 |
| POM-Gehalt | 58,7 | 58,6 | 59,4 | 58,9 | 58,5 | 58,5 | 59,3 | 0 | 0 |

| | | | | | | | | | |
|---|---|---|---|---|---|---|---|---|---|
| HBsp = Herstellungsbeispiel; alle Angaben in Gew.-Teile, außer POM-Gehalt in g/kg; Gelkatalysator ist eine Mischung aus 95 Gew.-% 6-Dimethylamino-1-hexanol und 5 Gew.-% N-[2-[2-dimethylamino)ethoxy]ethyl]-N-methyl-1,3-propandiamin. | | | | | | | | | |

**Schaumstoffe: Herstellung**

| | VBsp1 | VBsp2 | Bspl | Vbsp3 | VBsp4 | Bsp2 | Bsp3 | Bsp4 |
|---|---|---|---|---|---|---|---|---|
| Kennzahl | 90 | 90 | 90 | 70 | 70 | 70 | 70 | 90 |
| Polyolformulierung | HBsp1 | HBsp2 | HBsp4 | HBsp5 | HBsp6 | HBsp7 | HBsp8 | HBsp9 |
| Isocyanat | VPp2 | VPp2 | Pp1 | VPp2 | VPp2 | Pp1 | Pp1 | Pp1 |
| Isocyanat Gramm pro 100 Gramm Polyolformulierung (Gew.-Teile) | 66,3 | 66,5 | 65,6 | 51,6 | 51,8 | 50,8 | 49,9 | 64,1 |
| POM-Gehalt im System (g/kg) | 46,4 | 46,3 | 44,1 | 48,1 | 48,1 | 46,5 | 7,2 | 8,4 |
| Startzeit | 12 | 13 | 12 | | 12 | 12 | 10 | 10 |
| Abbindezeit | 85 | 73 | 75 | 67 | 78 | 76 | 78 | 78 |
| Steigzeit | | 95 | 115 | 100 | 100 | 105 | 90 | 78 |
| Bemerkung | Sackt ab | | | Nicht aufdrückbar | | | | |
| Zellstruktur | | fein | mittel | | feinmittel | mittel | mittel | mittel |
| Haut | | gut | ok | | gut | ok | gut | gut |

| | | | | | | | | |
|---|---|---|---|---|---|---|---|---|
| VBsp. = Vergleichsbeispiel | | | | | | | | |

**Schaumstoffe: Mechanische Eigenschaften**

| | | VBsp2 | Bsp1 | Bsp4 | Vbsp4 | Bsp5 | Bsp3 |
|---|---|---|---|---|---|---|---|
| Kennzahl | | 90 | 90 | 90 | 70 | 70 | 70 |
| | | Vergleich | | | Vergleich | | |
| Rohdichte DIN EN ISO 845 (2009) | kg/m³ | 58,6 | 46,1 | 55,4 | 54,6 | 47,3 | 57,6 |
| Druckversuch DIN EN ISO 3386-1 (Oktober 2015) | | | | | | | |
| • Kraft bei 40% Stauchung ("CV40") | kPa | 10 | 11 | 8 | 9 | 3 | 4 |
| • Dämpfung | | 0,34 | 0,35 | 0,29 | 0,27 | 0,32 | 0,23 |
| Druckverformungsrest nach DIN EN ISO 1856-2008 22 Stunden bei 70°C und 75% Stauchung | | 21% | 20% | | 55% | 15% | |
| Luftdurchlässigkeit nach ASTM D 3574 (2017) bei 125 Pa Differenzdruck | dm³/s | 0,25 | 0,14 | 0,14 | 0,40 | 0,22 | 0,34 |

Es zeigt sich, dass der erfindungsgemäße Schaumstoff auf Basis des POM-haltigen Polyethers A2 günstiger in der Rohdichte und, bei Kennzahl 70, im Druckverformungsrest ist.

### Ergebnisse der Emissionstest nach der Thermodesorptionsmethode DIN EN ISO/IEC 17025:2011-10 ("VDA278")

VOC: 90°C, Retentionszeitfenster bis n-Pentacosan (C25): 48,40 min
Schaumstoffe Kennzahl 70, Angaben in mg/kg Toluoläquivalent

| Polyol | Isocyanat | | A | B | C | D | E | F | Gesamt |
|---|---|---|---|---|---|---|---|---|---|
| HBsp5 | VPp2 | Vergleich | 18 | 1 | 4 | 1 | | 5 | 29 |
| HBsp7 | Pp1 | | 6 | | 5 | | | 8 | 19 |

VOC-Auswertung nach Massenbibliothek: A sind Dipropylenglykol und Oligomere des Propylenglykols; B ist Methyldioxolan, C ist cyclisches Propylenkarbonat, D ist Tetradekan, E ist Dimethylaminocyklohexanol, F sind sonstige flüchtige organische Verbindungen.
Es zeigt sich, dass Schaumstoffe auf Basis der Polyethers A2 deutlich günstigere Emissionen aufweisen.

Schaumstoffe hergestellt mit Kennzahl 90, Angaben in mg/kg Toluoläquivalent

| Polyol | Isocyanat | | A | B | C | F | Gesamt |
|---|---|---|---|---|---|---|---|
| HBsp1 | VPp2 | Vergleich | | 1 | 4 | 6 | 11 |
| HBsp3 | Pp1 | | | | | 8 | 8 |

Auswertung nach Massenbibliothek: A sind Dipropylenglykol und Oligomere des Propylenglykols; B ist Methyldioxolan, C ist cyclisches Propylenkarbonat, F sind sonstige flüchtige organische Verbindungen.
Es zeigt sich, dass Schaumstoffe, die mit höherer Kennzahl hergestellt werden, deutlich günstigere Emissionen aufweisen. Es zeigt sich, dass Schaumstoffe auf Basis der Polyethers A2 deutlich günstigere Emissionen aufweisen.

FOG: 120°C, Retentionszeitfenster Tetradecan (C14): 11 min - Dotricontan (C32) 41,65 min
Schaumstoffe hergestellt mit Kennzahl 90, Angaben in mg/kg Hexadecanäquivalent

| Polyol | Isocyanat | | A | G | F | Gesamt |
|---|---|---|---|---|---|---|
| HBsp1 | VPp2 | Vergleich | | | 6 | 6 |
| HBsp3 | Pp1 | | | | 2 | 2 |

Auswertung nach Massenbibliothek: A sind Dipropylenglykol und Oligomere des Propylenglykols; B ist Methyldioxolan, C ist cyclisches Propylenkarbonat, F sind sonstige flüchtige organische Verbindungen.
Es zeigt sich, dass Schaumstoffe, die mit höherer Kennzahl hergestellt werden, deutlich günstigere Emissionen aufweisen. Es zeigt sich, dass Schaumstoffe auf Basis der Polyethers A2 deutlich günstigere Emissionen aufweisen.

Schaumstoffe hergestellt mit Kennzahl 70, Angaben in mg/kg Hexadecanäquivalent

| Polyol | Isocyanat | | A | G | F | Gesamt |
|---|---|---|---|---|---|---|
| HBsp5 | VPp2 | Vergleich | 38 | 2 | 2 | 42 |
| HBsp7 | Pp1 | | 23 | 1 | 1 | 25 |

Auswertung nach Massenbibliothek: A sind Dipropylenglykol und Oligomere des Propylenglykols; F sind sonstige flüchtige organische Verbindungen und G ist Acridin.
Es zeigt sich, dass Schaumstoffe auf Basis der Polyethers A2 deutlich günstigere Emissionen aufweisen

### Emissionstest auf Aldehyde (modifizierte Flaschenmethode)

In eine Glasflasche von einem Liter Volumen werden 25 Milliliter Wasser und 25 Milliliter einer Lösung von 0,3 mmol/Liter Dinitrophenylhydrazin (DNPH) in 3 mM phosphorsaurem Acetonitril gegeben. Der Gehalt an DNPH beträgt 7,5 µmol pro Flasche. Am Deckel wird eine Schaumstoffplatte der Größe 40*10*4 cm³ frei hängend befestigt so dass der Schaumstoff nicht mit der wässrigen Lösung am Boden der Flasche in Kontakt ist. Die Flasche wird verschlossen und 3 Stunden in einen Umlufttrockenschrank bei 65 °C gelagert. Man lässt die Flasche auf Raumtemperatur abkühlen, entnimmt den Schaumstoff und analysiert die Zusammensetzung der wässrigen Lösung per LC-MS/MS auf die Hydrazone der unten angegebenen Aldehyde. Zu jeder Schaumqualität werden drei Flaschen untersucht. Bei jedem Versuchslauf werden drei Flaschen ohne Schaumstoff mit untersucht. Der mittlere Blindwert wird von den Messwerten abgezogen. Auf dieser Basis wird auf die Emission der jeweiligen Aldehyde pro Kilogramm Schaumstoff zurückgerechnet. Die Angabe erfolgt im mg Aldehyd pro kg Schaumstoff.

Schaumstoffe hergestellt mit Kennzahl 90, Angaben in mg/kg Hexadecanäquivalent

| Polyol | Isocyanat | | Formaldehyd | | Acetaldehyd | |
|---|---|---|---|---|---|---|
| | | | mg/kg | Mikromol/kg | mg/kg | Mikromol/kg |
| HBsp1 | VPp2 | Vergleich | 7,4 | 247 | 1,2 | 27 |
| HBsp3 | Pp1 | | 9,5 | 318 | 0,7 | 15 |
| HBsp9 | Pp1 | | 1,4 | 47 | <0,3 | <7 |

Es zeigt sich, dass Schaumstoffe auf Basis der Polyethers A2 etwas ungünstigere Emissionen an Formaldehyd und deutlich günstigere beim Acetaldehyd aufweisen.

Schaumstoffe hergestellt mit Kennzahl 70, Angaben in mg/kg Hexadecanäquivalent

| Polyol | Isocyanat | | Formaldehyd | | Acetaldehyd | |
|---|---|---|---|---|---|---|
| | | | mg/kg | Mikromol/ kg | mg/kg | Mikromol/ kg |
| HBsp5 | VPp2 | Vergleich | 11,5 | 384 | | 33 |
| HBsp7 | Pp1 | | 15,2 | 473 | | 15 |
| HBsp8 | Pp1 | | 1,4 | 47 | < 0,3 | < 7 |

Es zeigt sich, dass Schaumstoffe auf Basis der Polyethers A2 etwas ungünstigere Emissionen an Formaldehyd und deutlich günstigere beim Acetaldehyd aufweisen.

### Flammausbreitung nach der Methode FMVSS302 ohne Unterstützungsdrähte

| Polyol | Isocyanat | | Kennzahl 70 | Kennzahl 90 | Mittelwert | |
|---|---|---|---|---|---|---|
| HBsp5 | VPp2 | Vergleich | 1,37 | 1,05 | 1,21 | mm/s |
| HBsp7 | Pp1 | | 1,11 | 1,18 | 1,15 | mm/s |

Beim Vergleich der beiden Polyether A1 und A2, die beide POM-Blöcke enthalten, zeigt sich, dass im Mittel derjenige mit der geringeren OH-Zahl das etwas günstigere Ergebnis liefert.
Die Anforderungen nach Richtlinie 95/28/EG an die horizontale Brenngeschwindigkeit werden von allen Typen erfüllt. Die Anforderungen der Norm FMVSS 302 wurden von allen Schaumstoffen erfüllt außer dem Vergleichsbeispiel VPp2/Kennzahl 70.

### Gehalt an Methylenbisdiphenylamin (MDA)

Die Bestimmung erfolgt nach der sogenannten "Skarping"-Extraktionsmethode nach Certipur® mit 0,1-molarer Essigsäure. Dabei wird der Schaumstoff aus dem Randbereich des Formkörpers in Stücke von 0,5 Gramm geschnitten. Diese Stücke werden in eine Plastikspritze eingefüllt. Es werden 3 cm³ 0,1-molare Essigsäure in die Spritze eingefüllt. Der Stempel der Spritze wird wieder eingesetzt und der Inhalt der Spritze wird zusammengedrückt. Die Flüssigkeit wird in einem Glasgefäß aufgefangen. Diese Flüssigkeit wird wieder komplett aufgesaugt und wieder ausgepresst. Insgesamt werden 20 Extraktionszyklen durchgeführt. Die essigsaure Lösung wird schließlich filtriert und mit HPLC-UV auf aromatische Amine untersucht. Die Angabe erfolgt in Milligramm pro Kilogramm eingewogenen Schaumstoffes.

| | | | Kennzahl 70 | | Kennzahl 90 | | Mittelwert |
|---|---|---|---|---|---|---|---|
| | | | 2,4'-MDA | 4,4'-MDA | 2,4'-MDA | 4,4'-MDA | 2,4'-MDA + 4,4'MDA |
| Polyol | Isocyanat | | mg/kg | mg/kg | mg/kg | mg/kg | mg/kg |
| HBsp5 | VPp2 | Vergleich | 0,4 | 2,8 | 0,2 | 2,0 | 2,7 |
| HBsp7 | Pp1 | | 0,3 | 1,8 | 0,3 | 1,2 | 1,8 |
| | | | -25% | -36% | +50% | -40% | -33% |
| HBsp8 | Pp1 | | <0,2 | 0,6 | 0,2 | 0,4 | <0,7 |

Es zeigt sich, dass Schaumstoffe auf Basis des Polyethers A2 im Mittel geringere Gehalte an aromatischen Aminen aufweisen als solche auf Basis von Polyol A1.

## Patentansprüche

**1.** Verfahren zur Herstellung von Polyurethanweichschaumstoffen, durch Umsetzung einer Komponente A enthaltend
A1 5 bis 85 Gew.-Teile mindestens eines Polyoxymethylen-Polyoxyalkylen-Blockcopolymers mit einer Hydroxylzahl gemäß DIN EN ISO 4629-1:2016-12 von 5 mg KOH/g bis 56 mg KOH/g, stärker bevorzugt 35 bis 50, noch stärker bevorzugt 38 bis 48 mg KOH/g, wobei die beiden Polyoxyalkylenblöcke endständig sind;
A2 0 bis 95 Gew.-Teile mindestens einer Verbindung mit 2 bis 6 Zerewitinoff-aktiven H-Atomen ausgewählt aus der Gruppe der Polyetherpolyole, Polyesterpolyole, Polyetheresterpolyole, Polycarbonatpolyole und/oder Polyacrylatpolyole;
A3 0,1 bis 25 Gew.-Teile, bezogen auf die Summe der Gew.-Teile der Komponenten A1 und A2, Wasser und/oder physikalische Treibmittel,
A4 0 bis 10 Gew.-Teile, bezogen auf die Summe der Gew.-Teile der Komponenten A1 und A2, wenigstens einer Verbindung mit mindestens 2 Zerewitinoff-aktiven H-Atomen, die von A2 verschieden ist;
A5 0 bis 10 Gew.-Teile, bezogen auf die Summe der Gew.-Teile der Komponenten A1 und A2, Hilfs- und Zusatzstoffe;
mit einer Komponente B enthaltend
B1 mindestens ein Di- und/oder Polyisocyanat mit einer mittleren NCO Funktionalität von 2,0 bis 2,6;
wobei die Umsetzung der Komponente A mit der Komponente B in Gegenwart eines Katalysators und bei einer Isocyanat-Kennzahl von 50 bis 130 durchgeführt wird und wobei alle Gewichtsteilangaben der Komponenten A1 bis A5 so normiert sind, dass die Summe der Gewichtsteile A1 + A2 in der Zusammensetzung 100 ergibt.

**2.** Verfahren zur Herstellung von Polyurethanweichschaumstoffen durch Umsetzung einer Komponente A enthaltend
A11 0 bis 85 Gew.-Teile mindestens eines Polyoxymethylen-Polyoxyalkylen-Blockcopolymers bevorzugt mit einer Hydroxylzahl gemäß DIN EN ISO 4629-1:2016-12 von 5 mg KOH/g bis 56 mg KOH/g, stärker bevorzugt 35 bis 50, noch stärker bevorzugt 38 bis 48 mg KOH/g, wobei die beiden Polyoxyalkylenblöcke endständig sind;
A12 0 bis 100 Gew.-Teile mindestens einer Verbindung mit 2 bis 6 Zerewitinoff-aktiven H-Atomen ausgewählt aus der Gruppe der Polyetherpolyole, Polyesterpolyole, Polyetheresterpolyole, Polycarbonatpolyole und/oder Polyacrylatpolyole;
A13 0,1 bis 25 Gew.-Teile, bezogen auf die Summe der Gew.-Teile der Komponenten A11 und A12, Wasser und/oder physikalische Treibmittel,
A14 0 bis 10 Gew.-Teile, bezogen auf die Summe der Gew.-Teile der Komponenten A11 und A12, wenigstens einer Verbindung mit mindestens 2 Zerewitinoff-aktiven H-Atomen, die von A2 verschieden ist;
A15 0 bis 10 Gew.-Teile, bezogen auf die Summe der Gew.-Teile der Komponenten A11 und A12, Hilfs- und Zusatzstoffe;
mit einer Komponente B enthaltend
B2 mindestens einem Prepolymer mit einem NCO-Gehalt von 18 bis 40 Gew.-% NCO, dass durch Umsetzen von
A1 5 bis 18 Gew.-Teile mindestens eines Polyoxymethylen-Polyoxyalkylen-Blockcopolymers mit einer Hydroxylzahl gemäß DIN EN ISO 4629-1:2016-12 von 5 mg KOH/g bis 56 mg KOH/g, wobei die beiden Polyoxyalkylenblöcke endständig sind;
A2 gegebenenfalls weiteren Isocyanat-reaktiven oder inerten Komponenten, die kein Polyoxymethylen enthalten;
mit
B1 mindestens einem Di- und/oder Polyisocyanat mit einer mittleren NCO Funktionalität von 2,0 bis 2,6, gegebenenfalls in Gegenwart eines Katalysators, erhalten wird, wobei sich die Gewichtsteile von B1 auf die Summe der Gewichtsteile von A1 und A2 bezieht, die auf 100 Gewichtssteile normiert werden;
wobei die Umsetzung der Komponente A mit der Komponente B in Gegenwart eines Katalysators und bei einer Isocyanat-Kennzahl von 50 bis 130 durchgeführt wird und wobei alle Gewichtsteilangaben der Komponenten A11 bis A15 so normiert sind, dass die Summe der Gewichtsteile A11 + A12 in der Zusammensetzung 100 ergibt.

**3.** Verfahren nach einem der vorstehenden Ansprüche, **dadurch gekennzeichnet, dass** der Polyoxymethylenblock des Polyoxymethylen-Polyoxyalkylen-Blockcopolymers A1 und/oder A11 ein gewichtsmittleres Molekulargewicht von 62 bis 30.000 g/mol aufweist, gemessen mittels Gelpermeationschromatographie unter der Verwendung von Polystyrolstandards.

**4.** Verfahren nach einem der vorstehenden Ansprüche, **dadurch gekennzeichnet, dass** das Polyoxymethylen-Polyoxyalkylen-Blockcopolymer A1 und/oder A11 folgende Formel (I) aufweist:
HO-(AlkO)ₓ-(CH₂O)"-(AlkO)_{y}-OH (I),
wobei
AlkO eine Struktureinheit ist, die sich unabhängig voneinander in jeder Struktureinheit von Ethylenoxid, Propylenoxid, Butylenoxid oder Styroloxid ableitet;
x 2 bis 100 ist;
y 2 bis 100 ist; und
n = 5 bis 100 ist.

**5.** Verfahren nach einem der vorstehenden Ansprüche, **dadurch gekennzeichnet, dass** A2 oder A12 ein Polypropylenoxid-Polyethylenoxid-Blockcopolymer mit einer mittleren Funktionalität zwischen 2,7 und 6, mit einer Hydroxylzahl gemäß DIN EN ISO 4629-1:2016-12 von 26 mg KOH/g bis 56 mg KOH/g und einem Verhältnis von Propylenoxid zu Ethylenoxid von 0,1 bis 9:1 ist.

**6.** Verfahren nach einem der vorstehenden Ansprüche, **dadurch gekennzeichnet, dass** sich das mindestens eine Di- und/oder Polyisocyanat B1 von MDI oder TDI oder Mischungen davon ableitet.

**7.** Verfahren nach einem der vorstehenden Ansprüche, **dadurch gekennzeichnet, dass** der Katalysator ein Katalysator ist, der mit Isocyanat zu Urethanen, Harnstoffen, Allophanaten oder Biureten reagiert.

**9.** Polyurethanweichschaumstoff erhältlich durch ein Verfahren gemäß einem der Ansprüche 1 bis 8.

**10.** Polyurethanweichschaumstoff gemäß Anspruch 9, **dadurch gekennzeichnet, dass** er eine Rohdichte von 0,02 bis 0,8 kg/dm³, gemessen mittels DIN ISO 845:2009-10 aufweist.

**11.** Polyurethanweichschaumstoff gemäß Anspruch 9 oder 10, **dadurch gekennzeichnet, dass** er die Anforderungen nach Richtlinie 95/28/EG und der Norm FMVSS 302 an die horizontale Brenngeschwindigkeit erfüllt.

**12.** Verwendung eines Polyurethanweichschaumstoffs gemäß einem der Ansprüche 9 bis 11 zur Herstellung von Möbelpolsterungen, Textileinlagen, Matratzen, Automobilsitze, Kopfstützen, Armlehnen, Schwämmen, Schaumstofffolien zur Verwendung in Automobilteilen wie beispielsweise Dachhimmeln, Türseitenverkleidungen, Sitzauflagen und Bauelementen.

**13.** Zweikomponentensystem zur Herstellung von Polyurethanweichschaumstoffen aus einer Komponente A enthaltend
A1 5 bis 85 Gew.-Teile mindestens eines Polyoxymethylen-Polyoxyalkylen-Blockcopolymers mit einer Hydroxylzahl gemäß DIN EN ISO 4629-1:2016-12 von 5 mg KOH/g bis 56 mg KOH/g, stärker bevorzugt 35 bis 50, noch stärker bevorzugt 38 bis 48 mg KOH/g, wobei die beiden Polyoxyalkylenblöcke endständig sind;
A2 0 bis 95 Gew.-Teile mindestens einer Verbindung mit 2 bis 6 Zerewitinoff-aktiven H-Atomen ausgewählt aus der Gruppe der Polyetherpolyole, Polyesterpolyole, Polyetheresterpolyole, Polycarbonatpolyole und/oder Polyacrylatpolyole,
A3 0,1 bis 25 Gew.-Teile, bezogen auf die Summe der Gew.-Teile der Komponenten A1 und A2, Wasser und/oder physikalische Treibmittel,
A4 0 bis 10 Gew.-Teile, bezogen auf die Summe der Gew.-Teile der Komponenten A1 und A2, wenigstens einer Verbindung mit mindestens 2 Zerewitinoff-aktiven H-Atomen, die von A2 verschieden ist;
A5 0 bis 10 Gew.-Teile, bezogen auf die Summe der Gew.-Teile der Komponenten A1 und A2, Hilfs- und Zusatzstoffe;
und einer Komponente B enthaltend
B1 mindestens einem Di- und/oder Polyisocyanat mit einer mittleren NCO Funktionalität von 2,0 bis 2,6;
und wenigstens eines Katalysators, wobei die Komponente A und die Komponente B in einem Verhältnis einer Isocyanat-Kennzahl von 50 bis 130 zueinander vorliegen, und wobei alle Gewichtsteilangaben der Komponenten A1 bis A5 so normiert sind, dass die Summe der Gewichtsteile A1 + A2 in der Zusammensetzung 100 ergibt.

**14.** Zweikomponentensystem zur Herstellung von Polyurethanweichschaumstoffen aus einer Komponente A enthaltend oder bestehend aus
A11 0 bis 85 Gew.-Teile mindestens eines Polyoxymethylen-Polyoxyalkylen-Blockcopolymers bevorzugt mit einer Hydroxylzahl gemäß DIN EN ISO 4629-1:2016-12 von 5 mg KOH/g bis 56 mg KOH/g, stärker bevorzugt 35 bis 50, noch stärker bevorzugt 38 bis 48 mg KOH/g, wobei die beiden Polyoxyalkylenblöcke endständig sind;
A12 0 bis 100 Gew.-Teile mindestens einer Verbindung mit 2 bis 6 Zerewitinoff-aktiven H-Atomen ausgewählt aus der Gruppe der Polyetherpolyole, Polyesterpolyole, Polyetheresterpolyole, Polycarbonatpolyole und/oder Polyacrylatpolyole;
A13 0,1 bis 25 Gew.-Teile, bezogen auf die Summe der Gew.-Teile der Komponenten A11 und A12, Wasser und/oder physikalische Treibmittel,
A14 0 bis 10 Gew.-Teile, bezogen auf die Summe der Gew.-Teile der Komponenten A11 und A12, wenigstens einer Verbindung mit mindestens 2 Zerewitinoff-aktiven H-Atomen, die von A2 verschieden ist;
A15 0 bis 10 Gew.-Teile, bezogen auf die Summe der Gew.-Teile der Komponenten A11 und A12, Hilfs- und Zusatzstoffe;
mit einer Komponente B enthaltend
B2 mindestens einem Prepolymer mit einem NCO-Gehalt von 18-40 Gew.-% NCO, dass durch Umsetzen von
A1 5 bis 18 Gew.-Teile, mindestens eines Polyoxymethylen-Polyoxyalkylen-Blockcopolymers mit einer Hydroxylzahl gemäß DIN EN ISO 4629-1:2016-12 von 5 mg KOH/g bis 56 mg KOH/g, stärker bevorzugt 35 bis 50, noch stärker bevorzugt 38 bis 48 mg KOH/g, wobei die beiden Polyoxyalkylenblöcke endständig sind;
A2 gegebenenfalls weiteren Isocyanat-reaktiven oder inerten Komponenten, die kein Polyoxymethylen enthalten,
B1 mindestens einem Di- und/oder Polyisocyanat mit einer mittleren NCO Funktionalität von mindestens 2,0 bis 2,6, gegebenenfalls in Gegenwart eines Katalysators, erhältlich ist, wobei sich die Gewichtsteile von B1 auf die Summe der Gewichtsteile von A1 und A2 bezieht, die auf 100 Gewichtssteile normiert werden;
und wenigstens eines Katalysators, wobei die Komponente A und die Komponente B in einem Verhältnis einer Isocyanat-Kennzahl von 50 bis 130 zueinander vorliegen, und wobei alle Gewichtsteilangaben der Komponenten A11 bis A15 so normiert sind, dass die Summe der Gewichtsteile A11 + A12 in der Zusammensetzung 100 ergibt.
